# EUROPÄISCHE PATENTSCHRIFT

(11) **EP 3 922 401 B1**
(45) Veröffentlichungstag und Bekanntmachung des Hinweises auf die Patenterteilung: **04.11.2026**
(21) Anmeldenummer: 21175854.5
(22) Anmeldetag: 26.05.2021
(51) Int. Cl.: H05B 6/10, H05B 6/42, B23P 11/02, H05B 6/14

(54) **SCHRUMPFSPANNABKÜHLVORRICHTUNG UND WERKZEUG-SCHRUMPFSPANNVERFAHREN**
SHRINKAGE TENSION COOLING DEVICE AND TOOL SHRINKAGE TENSION METHOD
DISPOSITIF DE REFROIDISSEMENT DE TENSION DE RETRAIT ET PROCÉDÉ DE TENSION DE RETRAIT D'OUTIL

(30) Priorität: 09.06.2020 DE 102020115236; 17.07.2020 DE 102020118997
(43) Veröffentlichungstag der Anmeldung: 15.12.2021
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74385 Pleidelsheim (DE); Pappas, Georges, 74385 Pleidelsheim (DE)
(74) Vertreter: Daub, Thomas

(56) Entgegenhaltungen:
- EP-A2- 1 310 323
- WO-A1-01/89758
- DE-A1- 102005 003 855
- DE-A1- 102005 043 206
- DE-A1- 102017 119 107
- DE-U1- 202013 007 878
- JP-A- 2001 062 638
- US-A- 6 161 309
- US-A1- 2009 205 811

## Beschreibung

### Stand der Technik

Die Erfindung betrifft eine Schrumpfspannabkühlvorrichtung nach dem Anspruch 1, ein System nach dem Anspruch 15, ein Schrumpfspanngerät nach dem Anspruch 16 und ein Werkzeug-Schrumpfspannverfahren nach dem Anspruch 18.

Es sind verschiedene Abkühlverfahren und -systeme für Warmschrumpffutter bekannt. Diese basieren beispielsweise auf einer Kontaktkühlung mit aufsetzbaren Kühlglocken, wobei verschiedene Kühlglocken für verschiedene Formen von Warmschrumpffuttern vorgehalten werden müssen oder auf einer Kühlung mittels einer Kühlflüssigkeit, welche eine Korrosion verursachen oder beschleunigen kann. DE 10 2005 043206 A1 offenbart den Oberbegriff des Anspruchs 1.

Die Aufgabe der Erfindung besteht insbesondere darin, eine gattungsgemäße Vorrichtung mit vorteilhaften Kühleigenschaften für Werkzeugaufnahmen und/oder Werkzeugeinheiten bereitzustellen. Die Aufgabe wird erfindungsgemäß durch die Merkmale der Patentansprüche und 18 gelöst, während vorteilhafte Ausgestaltungen und Weiterbildungen der Erfindung den Unteransprüchen entnommen werden können.

### Vorteile der Erfindung

Es wird eine Schrumpfspannabkühlvorrichtung, zumindest zur, insbesondere konturunabhängigen, Temperierung, vorzugsweise Kühlung, von, insbesondere zuvor, beispielsweise in einem Aufheizschritt eines Werkzeug-Schrumpfspannverfahrens oder in einem Dampfreinigungsschritt, aufgeheizten, Werkzeugaufnahmen und/oder Werkzeugen, mit zumindest einem Kühlbehälter, welcher einen Aufnahmeraum zur Aufnahme zumindest einer, eine Werkzeugaufnahme und ein Werkzeug umfassenden, Werkzeugeinheit ausbildet, und mit zumindest einem Klimagerät, welches dazu vorgesehen ist, ein in dem Aufnahmeraum des Kühlbehälters enthaltenes Kühlgas oder Kühlgasgemisch, insbesondere Kühlluft, und/oder ein dem Aufnahmeraum des Kühlbehälters zugeführtes Kühlgas oder Kühlgasgemisch, insbesondere Kühlluft, zur Unterstützung einer Abkühlung der Werkzeugeinheit zu temperieren, vorzugsweise aktiv zu kühlen, vorgeschlagen. Dadurch können insbesondere vorteilhafte Eigenschaften hinsichtlich einer Kühlung von Werkzeugaufnahmen und/oder Werkzeugeinheiten, insbesondere in einem Schrumpfspannprozess und/oder in einem Heißdampfreinigungsprozess, erreicht werden. Vorteilhaft kann, insbesondere im Vergleich mit aufsetzbaren Kühlglocken zu einer Kontaktkühlung, eine Kühlung der kompletten Werkzeugaufnahme und/oder der kompletten Werkzeugeinheit ermöglicht werden. Dadurch kann vorteilhaft eine durch eine in der Werkzeugeinheit nach einem Kühlen verbleibende Wärme erzeugte nachträgliche Längenänderung verhindert werden. Dies ist insbesondere bei einer Verwendung von Kühlglocken oft der Fall, da dabei zwar der Kontaktbereich gut und vollständig abgekühlt wird, sich jedoch eine Restwärme in dem Werkzeug der Werkzeugeinheit oder in einem unteren Bereich der Werkzeugaufnahme der Werkzeugeinheit befinden kann, welche langsam abkühlt und somit dazu führen kann, dass Messwerte, welche vor einem vollständigen Abkühlen der Werkzeugeinheit aufgezeichnet werden, nachträglich angepasst werden müssen, beispielsweise mittels eines Korrekturfaktors, welcher die voraussichtliche Messwertänderung, beispielsweise Längenänderung, berücksichtigt. Dadurch können Messunsicherheiten entstehen, welche mit der vorgeschlagenen Schrumpfspannabkühlvorrichtung vorteilhaft eliminiert werden können. Zudem kann vorteilhaft eine von der Kontur der Werkzeugaufnahme und/oder der Werkzeugeinheit unabhängige Kühlung, vorzugsweise Komplettkühlung der Werkzeugaufnahme und/oder der Werkzeugeinheit, erreicht werden.

Die Schrumpfspannabkühlvorrichtung ist insbesondere dazu vorgesehen, eine Temperatur eines Werkzeugs, einer Werkzeugaufnahme, insbesondere eines Warmschrumpffutters und/oder einer Spannzange, zu senken, vorzugsweise einer Zimmertemperatur (etwa 25°C) anzunähern. Dabei kann die Werkzeugaufnahme zuvor durch eine Induktionsheizvorrichtung, beispielsweise eine Induktionsspule, in dem Aufheizschritt des Werkzeug-Schrumpfspannverfahrens aufgeheizt worden sein. Alternativ oder zusätzlich kann dabei das Werkzeug oder die Spannzange in einem Dampfreinigungsschritt durch heißen Dampf aufgewärmt worden sein. Unter einer "Werkzeugaufnahme" soll insbesondere ein Bauteil verstanden werden, welches zu einer Aufnahme eines Werkzeugs, insbesondere eines Schafts eines Schaftwerkzeugs, und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Warmschrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Der Kühlbehälter umschließt den Aufnahmeraum zumindest zu einem Großteil. Unter einem "Großteil" soll insbesondere 66 %, vorzugsweise 80 %, bevorzugt 90 % und besonders bevorzugt 95 % verstanden werden. Es ist denkbar, dass der Kühlbehälter den Aufnahmeraum in zumindest einem Betriebszustand vollständig verschließt. Zudem ist denkbar, dass der Kühlbehälter zwei, drei oder mehr als drei voneinander zumindest teilweise separierbare Aufnahmeräume umfasst und/oder dass die Schrumpfspannabkühlvorrichtung zwei, drei oder mehr als drei Kühlbehälter aufweist. Beispielsweise umfasst der Kühlbehälter einen Deckel, welcher eine Öffnung des Aufnahmeraums wahlweise verschließt oder nicht verschließt.

Ferner soll in diesem Zusammenhang unter einer "Werkzeugeinheit" insbesondere eine Einheit verstanden werden, welche aus einem Werkzeug und einer Werkzeugaufnahme besteht. Vorzugsweise ist die Werkzeugeinheit zu einem direkten Einbau in eine Bearbeitungsmaschine, wie beispielsweise eine Fräsmaschine, eine Bohrmaschine und/oder eine Drehmaschine, vorgesehen. Vorzugsweise ist in der Werkzeugeinheit das Werkzeug auszugsfest in der Werkzeugaufnahme montiert. Alternativ kann die Werkzeugeinheit auch als ein Komplettwerkzeug ausgebildet sein oder eine Spannzange umfassen. Das Klimagerät ist insbesondere als eine Klimaanlage ausgebildet. Das Klimagerät ist insbesondere dazu vorgesehen, das in dem Aufnahmeraum enthaltene Kühlgas, insbesondere die in dem Aufnahmeraum enthaltene Kühlluft, vorzugsweise kontinuierlich, abzukühlen. Das Klimagerät ist insbesondere dazu vorgesehen, der in dem Aufnahmeraum enthaltenen Kühlluft, vorzugsweise kontinuierlich, Wärme zu entziehen und vorzugsweise nach außen abzuleiten. Das Klimagerät ist insbesondere dazu vorgesehen, eine Umgebungsluft abzukühlen und in den Aufnahmeraum zu leiten. Das Kühlgasgemisch ist vorzugsweise Luft. Andere Kühlgase, wie beispielsweise Stickstoff, oder andere Kühlgasgemische sind jedoch auch denkbar. Unter einem "wesentlichen Temperieren" soll insbesondere eine aktiv durch das Kühlgas oder Kühlgasgemisch erzeugte Temperaturänderung von zumindest 10°C, vorzugsweise von zumindest 20° und bevorzugt von zumindest 50°C verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist die Schrumpfspannabkühlvorrichtung frei von Kontaktkühlelementen, beispielsweise Kühlglocken oder Kühlmanschetten, welche Teile der Werkzeugeinheit gezielt zur Abführung einer Wärme berühren. Insbesondere ist die Schrumpfspannabkühlvorrichtung frei von Kühlflüssigkeiten, welche bei einem Abkühlvorgang in einen direkten Kontakt mit Teilen der Werkzeugeinheit kommen. Vorzugsweise ist die Schrumpfspannabkühlvorrichtung frei von Düsen oder Auslässen, welche eine Flüssigkeit direkt dem Aufnahmeraum zuführen, eine Flüssigkeit direkt in den Aufnahmeraum versprühen und/oder eine Flüssigkeit direkt in den Aufnahmeraum vernebeln. Unter einer "aktiven Kühlung" soll insbesondere eine Kühlung verstanden werden, welche über eine einfache Umgebungs-Abkühlung (Wärmestrahlung, Advektion, Ventilation) hinaus geht. Ferner wird vorgeschlagen, dass das Kühlgas oder das Kühlgasgemisch in dem Kühlbehälter und/oder der Kühlbehälter selbst, insbesondere bereits vor einer Einlagerung der Werkzeugeinheit oder der Werkzeugaufnahme in den Kühlbehälter, durch das Klimagerät vorkühlbar und/oder vorgekühlt ist. Dadurch können insbesondere vorteilhafte Eigenschaften hinsichtlich einer Kühlung von Werkzeugaufnahmen und/oder Werkzeugeinheiten, insbesondere in einem Schrumpfspannprozess und/oder in einem Heißdampfreinigungsprozess, erreicht werden. Vorteilhaft kann eine möglichst kurze Kühldauer bis zu einem Erreichen einer Zieltemperatur erreicht werden. Vorteilhaft kann dadurch eine hohe Taktzahl und/oder ein hoher Durchlauf von Werkzeugeinheiten erreicht werden. Das Klimagerät ist insbesondere dazu vorgesehen, einen Kühlbehälter bereitzustellen, welcher ein in dem Aufnahmeraum vorgekühltes Kühlgas oder Kühlgasgemisch enthält. Darunter, dass der "Kühlbehälter selbst vorgekühlt ist" soll insbesondere verstanden werden, dass zumindest die den Kühlbehälter in Richtung des Aufnahmeraums begrenzenden Innenwände des Kühlbehälters wesentlich vorgekühlt sind.

Zudem umfasst die Schrumpfspannabkühlvorrichtung zumindest eine Umwälzeinheit, welche dazu vorgesehen ist, eine zumindest im Wesentlichen gleichmäßige Temperaturverteilung innerhalb des Kühlbehälters herzustellen. Dadurch kann vorteilhaft eine gleichmäßige Abkühlung der Werkzeugeinheit in dem Kühlbehälter erreicht werden. Vorteilhaft kann dadurch verhindert werden, dass es durch eine ungleichmäßige, z.B. überwiegend einseitige, Kühlung zu lokal unterschiedlichen Längenkontraktionen der sich abkühlenden Werkzeugeinheit kommt, was insbesondere durch unterschiedliche Wärmeausdehnungskoeffizienten von Werkzeug und Werkzeugaufnahme zu einer unerwünschten Verbiegung und damit zu einem Verzug oder zu einem Rundlauffehler der Werkzeugeinheit führen kann. Insbesondere umfasst die Umwälzeinheit zumindest ein, vorzugsweise zumindest zwei, Gebläse. Alternativ sind auch mehr als zwei Gebläse denkbar. Die Gebläse sind an unterschiedlichen, insbesondere gegenüberliegenden, Seiten des Kühlbehälters angeordnet. Die Gebläse sind auf unterschiedlichen, insbesondere gegenüberliegenden, Seiten der in dem Kühlbehälter gelagerten Werkzeugeinheiten angeordnet. Darunter, dass die Umwälzeinheit eine "im Wesentlichen gleichmäßige Temperaturverteilung" in dem Kühlbehälter erzeugt, soll insbesondere verstanden werden, dass ein von der Werkzeugeinheit ausgehender Temperaturgradient in alle Raumrichtungen im Wesentlichen identisch ist, d.h. insbesondere sich in zwei unterschiedlichen, insbesondere gegenüberliegenden, vom der Werkzeugeinheit ausgehenden Raumrichtungen um höchstens 20 %, vorzugsweise um höchstens 10 % und bevorzugt um höchstens 5 % unterscheidet. Insbesondere ist eine Position und/oder Ausrichtung der Gebläse der Umwälzeinheit in dem Kühlbehälter und/oder eine Gebläsestärke derart gewählt, dass die Werkzeugeinheiten besonders gleichmäßig von dem Kühlgas oder von dem Kühlgasgemisch umströmt werden.

Außerdem wird vorgeschlagen, dass der Kühlbehälter, insbesondere mit Ausnahme von Bauteilen des die Kühlluft erzeugenden Klimageräts, frei ist von Bauteilen, die eine Flüssigkeit führen, beispielsweise kühlflüssigkeitsführende Schläuche und/oder Kühlmanschetten, frei ist von Bauteilen, die eine Flüssigkeit verspritzen, beispielsweise Düsen oder Flüssigkeitsauslässe, frei ist von Bauteilen, die eine Flüssigkeit versprühen, beispielsweise Düsen oder Flüssigkeitsvernebler, frei ist von Bauteilen, die einen Dampf führen, dampfführende Schläuche und/oder Kühlmanschetten, frei ist von Bauteilen, die einen Dampf verspritzen, beispielsweise Düsen oder Dampfauslässe, und frei ist von Bauteilen, die einen Dampf versprühen, beispielsweise Flüssigkeitsverdampfer. Dadurch können vorteilhafte Eigenschaften hinsichtlich einer Kühlung von Werkzeugaufnahmen und/oder Werkzeugeinheiten erreicht werden. Vorteilhaft kann ein, eine Korrosion begünstigender, Kontakt der Werkzeugeinheit mit Kühlflüssigkeiten verhindert werden. Zudem kann vorteilhaft auf einen wartungsintensiven und potentiell fehleranfälligen (z.B. Undichtigkeiten) Kühlflüssigkeitskreislauf verzichtet werden.

Des Weiteren umfasst die Schrumpfspannabkühlvorrichtung eine zumindest teilweise in dem Aufnahmeraum des Kühlbehälters angeordnete, zumindest zwei Taktplätze aufweisende und beweglich gelagerte Halteeinrichtung zur Halterung von zumindest zwei Werkzeugeinheiten oder von zumindest zwei Werkzeugaufnahmen. Dadurch kann vorteilhaft eine Kühlung mehrerer Werkzeugeinheiten ermöglicht werden. Vorteilhaft kann dadurch eine hohe Taktzahl und/oder ein hoher Durchlauf von gekühlten Werkzeugeinheiten erreicht werden. Insbesondere werden die Taktplätze sukzessive (ein Taktplatz nach dem anderen) mit abzukühlenden Werkzeugeinheiten belegt. Insbesondere werden aus den Taktplätzen sukzessive (ein Taktplatz nach dem anderen) abgekühlte Werkzeugeinheiten entnommen. Insbesondere sind die Taktplätze zur Aufnahme bestimmter Typen von Werkzeugeinheiten oder Werkzeugaufnahmen vorgesehen. Insbesondere ist das die Taktplätze ausbildende Bauteil der Halteeinrichtung modifizierbar oder auswechselbar, so dass vorteilhaft Taktplätze für verschieden geformte Werkzeugeinheiten oder Werkzeugaufnahmen bereitgestellt werden können. Alternativ oder zusätzlich ist denkbar, dass die Halteeinrichtung wechselbare Halteeinsätze aufweist, die insbesondere in die Taktplätze einsetzbar sind und diese dadurch für eine Aufnahme bestimmter Werkzeugeinheiten oder Werkzeugaufnahmen anpassen. Vorzugsweise weist die Halteeinrichtung mehr als zwei Taktplätze auf, beispielsweise zumindest drei Taktplätze, zumindest vier Taktplätze, zumindest fünf Taktplätze, zumindest sechs Taktplätze, zumindest sieben Taktplätze, zumindest acht Taktplätze, zumindest neun Taktplätze, zumindest zehn Taktplätze oder mehr als zehn Taktplätze. In einem bevorzugten Ausführungsbeispiel weist die Halteeinrichtung acht Taktplätze auf. Darunter, dass die Halteeinrichtung zumindest teilweise in dem Aufnahmeraum des Kühlbehälters angeordnet ist soll insbesondere verstanden werden, dass zumindest ein Taktplatz der Halteeinrichtung, vorzugsweise zumindest zwei Taktplätze der Halteeinrichtung, bevorzugt zumindest ein Drittel aller Taktplätze der Halteeinrichtung oder besonders bevorzugt zumindest eine Hälfte aller Taktplätze der Halteeinrichtung in jedem Betriebszustand der Schrumpfspannabkühlvorrichtung zumindest teilweise, vorzugsweise vollständig, in dem Inneren des Aufnahmeraums angeordnet sind. Vorteilhaft sind alle Taktplätze und/oder die gesamte Halteeinrichtung in dem Inneren des Aufnahmeraums angeordnet.

Wenn die Schrumpfspannabkühlvorrichtung eine Antriebseinheit aufweist, welche dazu vorgesehen ist, die Halteeinrichtung, insbesondere die verschiedenen Taktplätze der Halteeinrichtung, durch eine Bewegung der Halteeinrichtung in eine Taktplatz-Einlagerposition oder in eine Taktplatz-Auslagerposition zu verbringen, kann vorteilhaft eine einfache, vorzugsweise zumindest teilautomatisierte, Bestückung oder Entleerung des Kühlbehälters erreicht werden. Vorteilhaft kann dadurch eine hohe Taktzahl und/oder ein hoher Durchlauf von gekühlten Werkzeugeinheiten erreicht werden. Die Antriebseinheit umfasst insbesondere einen Antriebsmotor, beispielsweise einen Elektromotor. Unter einer "Taktplatz-Einlagerposition" und/oder einer "Taktplatz-Auslagerposition" soll insbesondere eine Position der die Mehrzahl an Taktplätzen aufweisenden Halteeinrichtung verstanden werden, in der ein einfacher Zugriff auf den Taktplatz durch einen Bediener, durch einen Handhabungsroboter, durch eine zumindest teilweise in dem Kühlbehälter angeordnete Linearhubeinheit oder dergleichen ermöglicht ist. Vorzugsweise sind die "Taktplatz-Einlagerposition" und die "Taktplatz-Auslagerposition" identisch. Es ist jedoch auch denkbar, dass die "Taktplatz-Einlagerposition" und die "Taktplatz-Auslagerposition" unterschiedlich sind.

Wenn zudem die Antriebseinheit dazu vorgesehen ist, die Taktplätze der Halteeinrichtung rotatorisch um eine Antriebsrotationsachse der Halteeinrichtung zu bewegen, kann vorteilhaft eine einfache und/oder effektive Konstruktion der Halteeinrichtung ermöglicht werden. Zudem kann vorteilhaft ein besonders einfacher und vorteilhafter Wechsel zwischen verschiedenen Taktplätzen der Halteeinrichtung erreicht werden. Vorteilhaft kann eine einfache Positionierung eines bestimmten Taktplatzes in die "Taktplatz-Einlagerposition" oder in die "Taktplatz-Auslagerposition" ermöglicht werden. Insbesondere ist die Antriebseinheit dazu vorgesehen, die gesamte Halteeinrichtung rotatorisch um die Antriebsrotationsachse zu bewegen

Ferner wird in diesem Zusammenhang vorgeschlagen, dass die Antriebsrotationsachse der Antriebseinheit zum Antrieb der Rotationsbewegung der Halteeinrichtung, insbesondere in einer betriebsbereiten Position der Schrumpfspannabkühlvorrichtung, vorzugsweise des Kühlbehälters, vertikal ausgerichtet ist und/oder dass die Antriebsrotationsachse der Antriebseinheit zumindest im Wesentlichen parallel zu einer Werkzeugrotationsachse von in der Halteeinrichtung gehalterten Werkzeugeinheiten oder Werkzeugaufnahmen ausgerichtet ist. Dadurch kann insbesondere eine vorteilhafte Lagerung, Bestückung und/oder Entnahme von Werkzeugeinheiten oder Werkzeugaufnahmen in dem Kühlbehälter ermöglicht werden. Insbesondere sind die Taktplätze in diesem Fall karussellartig in einer horizontalen Ebene bewegbar. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Wenn die Schrumpfspannabkühlvorrichtung zudem eine von der Halteeinrichtung getrennt ausgebildete Ein- und/oder Auslagereinheit aufweist, welche zu einer Einlagerung der Werkzeugeinheiten oder Werkzeugaufnahmen in den Kühlbehälter und/oder zu einer Auslagerung der Werkzeugeinheiten oder Werkzeugaufnahmen aus dem Kühlbehälter vorgesehen ist, kann eine einfache und/oder vorteilhafte Bestückung und/oder Entnahme von Werkzeugeinheiten oder Werkzeugaufnahmen in den Kühlbehälter, vorzugsweise in die in dem Kühlbehälter angeordnete Halteeinrichtung, ermöglicht werden. Insbesondere ist die Ein- und/oder Auslagereinheit dazu vorgesehen, die Werkzeugeinheiten oder Werkzeugaufnahmen in die Halteeinrichtung einzusetzen und/oder aus der Halteeinrichtung zu entnehmen. Insbesondere ist die Ein- und/oder Auslagereinheit zumindest teilweise, vorzugsweise vollständig, in dem Aufnahmeraum angeordnet. Insbesondere ist die Ein- und/oder Auslagereinheit als eine Linearhubeinheit ausgebildet, welche vorzugsweise die Werkzeugeinheiten oder Werkzeugaufnahmen in Vertikalrichtung, vorzugsweise in eine zumindest im Wesentlichen parallel zu der Antriebsrotationsachse und/oder zumindest im Wesentlichen parallel zu der Werkzeugrotationsachse einer in der Ein- und/oder Auslagereinheit positionierten Werkzeugeinheit, bewegt. Insbesondere ist die Ein- und/oder Auslagereinheit dazu vorgesehen, die Taktplätze sukzessive (ein Taktplatz nach dem anderen Taktplatz) mit Werkzeugeinheiten oder Werkzeugaufnahmen zu bestücken und/oder Werkzeugeinheiten oder Werkzeugaufnahmen sukzessive aus den Taktplätzen zu entfernen. Insbesondere umfassen die Ein- und/oder Auslagereinheit und die Halteeinrichtung separate Antriebseinheiten, insbesondere Antriebsmotoren. Insbesondere umfasst die Ein- und/oder Auslagereinheit eine pneumatische oder eine elektromotorische Antriebseinheit, vorzugsweise einen pneumatischen oder eine elektromotorischen Antriebsmotor.

Alternativ wird außerdem vorgeschlagen, dass die Antriebsrotationsachse der Antriebseinheit zum Antrieb der Rotationsbewegung der Halteeinrichtung, insbesondere in einer betriebsbereiten Position der Schrumpfspannabkühlvorrichtung, vorzugsweise des Kühlbehälters, horizontal ausgerichtet ist und/oder dass die Antriebsrotationsachse der Antriebseinheit zumindest im Wesentlichen senkrecht zu einer Werkzeugrotationsachse von in der Halteeinrichtung gehalterten Werkzeugeinheiten oder Werkzeugaufnahmen ausgerichtet ist. Dadurch kann insbesondere eine vorteilhafte Lagerung, Bestückung und/oder Entnahme von Werkzeugeinheiten oder Werkzeugaufnahmen in dem Kühlbehälter ermöglicht werden. Vorteilhaft kann dadurch auf eine separate Hubeinheit zur Ein- und/oder Auslagerung verzichtet werden. Insbesondere sind die Taktplätze in diesem Fall riesenradartig in einer vertikalen Ebene bewegbar. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Wenn zusätzlich die Halteeinrichtung zugleich eine Ein- und/oder Auslagereinheit ausbildet, welche zu einer Einlagerung der Werkzeugeinheiten oder Werkzeugaufnahmen in den Kühlbehälter und/oder zu einer Auslagerung der Werkzeugeinheiten oder Werkzeugaufnahmen aus dem Kühlbehälter vorgesehen ist, kann ein besonders vorteilhafter und/oder einfacher Aufbau der Schrumpfspannabkühlvorrichtung erreicht werden. Vorteilhaft können dadurch Gesamtkosten gering gehalten werden.

Weiterhin wird vorgeschlagen, dass die Schrumpfspannabkühlvorrichtung eine Kondenswasser-Auffangeinrichtung aufweist. Dadurch kann vorteilhaft eine hohe Betriebssicherheit erreicht werden. Insbesondere ist die Kondenswasser-Auffangeinrichtung dazu vorgesehen, die bei dem Abkühlen entstehende und aus dem Kühlgas oder dem Kühlgasgemisch auskondensierende Flüssigkeit (i.d.R. hauptsächlich Wasser) aufzufangen und zu sammeln. Es ist denkbar, dass die Schrumpfspannabkühlvorrichtung, insbesondere zumindest der Kühlbehälter in einem übergeordneten Gerät, beispielsweise in einer Multispann- und Mess- und/oder Einstellstation für Werkzeuge, wie sie z.B. in der deutschen Patentanmeldung mit der Anmeldenummer 10 2019 115 607.6 beschrieben ist, integriert ist. In diesem Fall weist die Multispann- und Mess- und/oder Einstellstation vorzugsweise zumindest einen Kamin zum Auslass des in der Schrumpfspannabkühlvorrichtung erwärmten Kühlgases oder Kühlgasgemischs auf. In einer Standalone-Version der Schrumpfspannabkühlvorrichtung wird das erwärmte Kühlgas oder Kühlgasgemisch vorzugsweise lediglich in die Umgebung der Schrumpfspannabkühlvorrichtung ausgeleitet.

Außerdem wird vorgeschlagen, dass die Schrumpfspannabkühlvorrichtung zumindest einen weiteren Kühlbehälter aufweist, welcher getrennt von dem Kühlbehälter ausgebildet ist und welcher einen weiteren Aufnahmeraum zur Aufnahme zumindest einer weiteren Werkzeugeinheit ausbildet. Dadurch kann vorteilhaft ein besonders effektives Kühlen von nacheinander angelieferten Werkzeugeinheiten ermöglicht werden. Vorteilhaft kann eine Verlängerung und/oder Beeinträchtigung eines Kühlvorgangs an einer Werkzeugeinheit durch Unterbrechungen wegen neu angelieferten Werkzeugeinheiten vermieden werden. Zudem können vorteilhaft mehrere Werkzeugeinheiten zumindest teilweise gleichzeitig gekühlt werden. Dadurch kann eine hohe Taktzahl und/oder Effizienz erreicht werden. Insbesondere ist der weitere Kühlbehälter zumindest im Wesentlichen identisch zu dem Kühlbehälter ausgebildet. Vorzugsweise sind die Kühlbehälter in einer Reihe nebeneinander angeordnet. Alternativ ist jedoch auch eine Anordnung übereinander denkbar. Insbesondere weist die Schrumpfspannabkühlvorrichtung noch zusätzliche weitere Kühlbehälter, beispielsweise insgesamt drei, vier oder fünf Kühlbehälter, auf, welche jeweils getrennt von den anderen Kühlbehältern ausgebildet sind und welche jeweils einen weiteren Aufnahmeraum zur Aufnahme zumindest einer weiteren Werkzeugeinheit ausbilden. Insbesondere können die einzelnen Kühlbehälter der Mehrzahl an getrennt voneinander ausgebildeten Kühlbehältern jeweils zur Aufnahme genau einer Werkzeugeinheit vorgesehen sein.

Wenn das Klimagerät dazu vorgesehen ist, die in dem Kühlbehälter und in dem weiteren Kühlbehälter enthaltenen, vorzugsweise alle in allen Kühlbehältern der Schrumpfspannabkühlvorrichtung enthaltenen, Kühlgase oder Kühlgasgemische unabhängig voneinander zu kühlen und/oder die Zufuhr der gekühlten Kühlgase oder Kühlgasgemische zu dem Kühlbehälter und zu dem weiteren Kühlbehälter unabhängig voneinander zu steuern und/oder zu regeln, kann vorteilhaft ein besonders effizientes und effektives Kühlschema ermöglicht werden. Vorteilhaft können dadurch verschiedene Werkzeugeinheiten getrennt voneinander optimal abgekühlt werden. Insbesondere umfasst die Schrumpfspannabkühlvorrichtung zumindest eine Steuer- und/oder Regeleinheit, welche dazu vorgesehen ist, das Klimagerät zu steuern und/oder zu regeln, insbesondere einzelne Kühlluftzufuhren des Klimageräts zu steuern und/oder zu regeln. Insbesondere ist die Steuer- und/oder Regeleinheit dazu vorgesehen, einen Kühlvorgang für eine Werkzeugeinheit in einem Aufnahmeraum unabhängig von einem Kühlvorgang für eine weitere Werkzeugeinheit in einem weiteren Aufnahmeraum zu steuern und/oder zu regeln, vorzugsweise zu starten, durchzuführen, zu beeinflussen und/oder zu stoppen. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einem Prozessor und mit einem elektronisch, magnetisch und/oder optisch auslesbaren Speicher sowie mit einem in dem Speicher gespeicherten Betriebsprogramm verstanden werden. Alternativ ist zudem auch denkbar, dass jedem Kühlbehälter oder zumindest einer Untergruppe von Kühlbehältern aller Kühlbehälter separate Klimageräte zugeordnet sind.

Des Weiteren wird vorgeschlagen, dass der Kühlbehälter und/oder der weitere Kühlbehälter, vorzugsweise alle Kühlbehälter der Schrumpfspannabkühlvorrichtung, ein, insbesondere rotatorisch, beweglich gelagertes Werkzeugeinheit-Aufstellelement zur Lagerung, vorzugsweise zum Aufstellen, zumindest einer Werkzeugeinheit umfasst, welches dazu vorgesehen ist, eine auf dem Werkzeugeinheit-Aufstellelement gelagerte Werkzeugeinheit, insbesondere mittels einer Rotation, zwischen einer Kühlposition des Kühlbehälters und einer Ein- und/oder Auslagerposition des Kühlbehälters zu bewegen. Dadurch kann vorteilhaft eine besonders einfach zu bedienende und/oder vorteilhaft automatisierte Ein- und/oder Auslagerung der Werkzeugeinheit ermöglicht werden. Das Werkzeugeinheit-Aufstellelement ist insbesondere von einer Unterseite oder einer Bodenplatte des Kühlbehälters gebildet. Das Werkzeugeinheit-Aufstellelement begrenzt vorzugsweise den Aufnahmeraum des Kühlbehälters nach unten hin. Insbesondere ist der Aufnahmeraum geschlossen, wenn sich die Werkzeugeinheit in der Kühlposition befindet. Insbesondere kann sich die Werkzeugeinheit in der Ein- und/oder Auslagerposition zumindest teilweise außerhalb des Aufnahmeraums befinden.

Alternativ ist denkbar, dass der Aufnahmeraum geöffnet ist, wenn sich die Werkzeugeinheit in der Ein- und/oder Auslagerposition befindet. Insbesondere folgt eine auf dem Werkzeugeinheit-Aufstellelement gelagerte Werkzeugeinheit allen Bewegungen, die das Werkzeugeinheit-Aufstellelement ausführt.

Im Weiteren wird vorgeschlagen, dass der Kühlbehälter und der weitere Kühlbehälter separat voneinander bedienbare Verschlusselemente aufweisen. Dadurch kann vorteilhaft ein besonders effizientes und effektives Kühlschema ermöglicht werden. Vorteilhaft können dadurch verschiedene Werkzeugeinheiten getrennt voneinander optimal abgekühlt werden. Darunter, dass die Kühlbehälter "separat bedienbare" Verschlusselemente aufweisen soll insbesondere verstanden werden, dass der Kühlbehälter und der weitere Kühlbehälter, vorzugsweise alle Kühlbehälter der Schrumpfspannabkühlvorrichtung, unabhängig voneinander schließbar und/oder öffenbar sind. Vorzugsweise sind die jeweiligen Verschlusselemente der Kühlbehälter um voneinander verschiedene Rotations- und/oder Schwenkachsen rotierbar und/oder verschwenkbar. Alternativ ist denkbar, dass die jeweiligen Verschlusselemente der Kühlbehälter auf voneinander verschiedenen (linearen) Translationsbahnen verschiebbar gelagert sind. Die Steuer- und/oder Regeleinheit ist dazu vorgesehen, Öffnungs- und/oder Schließbewegungen der jeweiligen Verschlusselemente verschiedener Kühlbehälter unabhängig voneinander zu steuern und/oder vorzunehmen.

Zusätzlich wird vorgeschlagen, dass das Verschlusselement zumindest eines der Kühlbehälter rotationsfest mit dem jeweiligen Werkzeugeinheit-Aufstellelement des zugehörigen Kühlbehälters verbunden ist. Vorzugsweise sind alle Verschlusselemente der verschiedenen Kühlbehälter rotationsfest mit dem jeweiligen Werkzeugeinheit-Aufstellelement des zugehörigen Kühlbehälters verbunden. Dadurch kann vorteilhaft eine besonders hohe Effizienz erreicht werden. Vorteilhaft kann damit durch eine Bewegung des Werkzeugeinheit-Aufstellelements gleichzeitig eine Öffnungs- und/oder Schließbewegung des Kühlbehälters und eine Verlagerung der Werkzeugeinheit zwischen Kühlposition und Ein- und/oder Auslagerposition erreicht werden. Darunter, dass das Verschlusselement "rotationsfest" mit dem Werkzeugeinheit-Aufstellelement verbunden ist soll insbesondere verstanden werden, dass das Verschlusselement derart mit dem Werkzeugeinheit-Aufstellelement verbunden ist, dass es Bewegungen, insbesondere Rotationsbewegungen, des Werkzeugeinheit-Aufstellelements (unmittelbar) folgt. Ferner wird vorgeschlagen, dass zumindest einem Kühlbehälter, vorzugsweise jedem Kühlbehälter, zumindest ein Temperatursensor zugeordnet ist, welcher dazu vorgesehen ist, eine Temperatur des Kühlgases oder Kühlgasgemischs innerhalb des Kühlbehälters und/oder eine Temperatur einer in dem Kühlbehälter angeordneten Werkzeugeinheit zu sensieren. Dadurch kann vorteilhaft ein besonders effektiver und effizienter Kühlvorgang erreicht werden. Vorteilhaft kann eine Kühldauer optimiert werden. Der Temperatursensor ist insbesondere als ein Gas- und/oder Lufttemperatursensor (bspw. ein Halbleiter-Temperatursensor) ausgebildet. Alternativ kann der Temperatursensor als ein Sensor zur Detektion einer Wärmestrahlung der Werkzeugeinheit, beispielsweise als eine Wärmekamera oder als ein Pyrometer, ausgebildet sein. Es ist denkbar, dass die Schrumpfspannabkühlvorrichtung eine Temperaturanzeige zur Darstellung von Messdaten des Temperatursensors umfasst. Die Temperaturanzeige kann beispielsweise als eine einfache LED-Anzeige mit zumindest zwei verschiedenfarbigen Leuchten, die heiß/kalt anzeigen, oder als eine Displayanzeige mit einer Darstellung des tatsächlich gemessenen Temperaturwerts ausgebildet sein. Insbesondere ist der Temperatursensor in dem Aufnahmeraum des jeweiligen Kühlbehälters angeordnet. Vorzugsweise ist der Temperatursensor in einer oberen Hälfte, bevorzugt in einem oberen Viertel und besonders bevorzugt in einem oberen Zehntel des Aufnahmeraums des jeweiligen Kühlbehälters, angeordnet.

Des Weiteren wird vorgeschlagen, dass das Verschlusselement des Kühlbehälters in Abhängigkeit von einer von dem Temperatursensor detektierten Temperatur zumindest teilautomatisiert, vorzugsweise vollautomatisiert, gesteuert ist. Dadurch kann vorteilhaft ein besonders effektiver und effizienter Kühlvorgang erreicht werden. Vorteilhaft kann eine Kühldauer optimiert werden. Vorteilhaft kann sichergestellt werden, dass die Werkzeugeinheit vor Entnahme aus dem Kühlbehälter vollständig abgekühlt ist, so dass die Werkzeugeinheit vorteilhaft direkt nach dem Abkühlvorgang exakt (µm-genau) vermessen werden kann. Eine bisher insbesondere bei einer Verwendung von Kühlglocken übliche "Akklimatisation", d.h. ein an den Kühlvorgang anschließender Wartezeitraum, in dem sich die Werkzeugeinheit äquilibriert, bzw. sich spannungstechnisch beruhigt, kann vorteilhaft übersprungen werden. Insbesondere ist die Steuer- und/oder Regeleinheit dazu vorgesehen, das Verschlusselement des Kühlbehälters, insbesondere eine Öffnungsstellung des Verschlusselements des Kühlbehälters, in Abhängigkeit von der von dem Temperatursensor detektierten Temperatur automatisiert zu steuern, insbesondere in eine Öffnungsstellung oder in eine Schließstellung zu bewegen. Insbesondere ist die Steuer- und/oder Regeleinheit dazu vorgesehen, alle Verschlusselemente auf Basis der jeweils zugehörigen Temperatursensoren separat zu steuern.

Zusätzlich wird ein System, insbesondere ein Schrumpfspannsystem, ein Dampfreinigungssystem, vorzugsweise Heißdampfreinigungssystem, und/oder eine Multispann- und Mess- und/oder Einstellstation für Werkzeuge, wie sie in der deutschen Patentanmeldung mit der Anmeldenummer 10 2019 115 607.6 beschrieben ist, mit der Schrumpfspannabkühlvorrichtung und mit einem Handhabungsroboter zu einer automatischen Bestückung der Schrumpfspannabkühlvorrichtung, insbesondere des Kühlbehälters, der Halteeinrichtung und/oder der Ein- und/oder Auslagereinheit, mit Werkzeugeinheiten oder Werkzeugaufnahmen und/oder zu einer Entnahme von Werkzeugeinheiten aus der Schrumpfspannabkühlvorrichtung, vorgeschlagen. Dadurch kann vorteilhaft ein hoher Grad an Automatisierung und dadurch eine Beschleunigung des gesamten Schrumpfspannvorgangs erreicht werden. Vorteilhaft kann dadurch zudem ein hoher Grad an Betriebssicherheit erreicht werden, da insbesondere kein händischer Transport heißer Teile nötig ist. Die Schrumpfspannabkühlvorrichtung bildet insbesondere einen Teil des Schrumpfspannsystems aus, welches unter anderem die Schrumpfspannabkühlvorrichtung, eine Induktionsheizvorrichtung und den Handhabungsroboter aufweist. Alternativ kann die Schrumpfspannabkühlvorrichtung auch in einem Heißdampfreinigungssystem eingesetzt werden, welches unter anderem die Schrumpfspannabkühlvorrichtung, eine Dampfreinigungsmaschine, vorzugsweise eine Heißdampfreinigungsmaschine, und den Handhabungsroboter aufweist.

Zudem wird ein Schrumpfspanngerät mit einer integrierten Schrumpfspannabkühlvorrichtung, mit zumindest einer integrierten Induktionsheizeinheit zur thermischen Aufweitung von mittels induktiven Erhitzens und vorzugsweise mit zumindest einer integrierten Längenmesseinrichtung zur Längenvermessung von Werkzeugeinheiten vorgeschlagen. Dadurch können vorteilhafte Eigenschaften hinsichtlich des Schrumpfspannprozesses erreicht werden. Vorteilhaft können dadurch kurze Wege zwischen der Induktionsheizeinheit und der Schrumpfspannabkühlvorrichtung ermöglicht werden. Dadurch kann vorteilhaft eine hohe Betriebssicherheit und/oder eine hohe Bedienersicherheit erreicht werden. Insbesondere ist das Schrumpfspanngerät als ein manuelles Schrumpfspanngerät, insbesondere als ein manuell bestückbares und/oder manuell ansteuerbares Schrumpfspanngerät ausgebildet. Insbesondere ist das Schrumpfspanngerät als ein Tischgerät ausgebildet. Insbesondere kann das Schrumpfspanngerät oder der Tisch, auf dem das Schrumpfspanngerät befestigt ist, mit Rollen ausgestattet sein, welche ein manuelles Verschieben des Schrumpfspanngeräts erlauben. Vorteilhaft ist das Schrumpfspanngerät dadurch als ein mobiles Schrumpfspanngerät ausgebildet. Insbesondere soll darunter, dass die Schrumpfspannabkühlvorrichtung, die Induktionsheizeinheit und/oder die Längenmesseinrichtung "integriert" ausgebildet sind, verstanden werden, dass die Schrumpfspannabkühlvorrichtung, die Induktionsheizeinheit und/oder die Längenmesseinrichtung in einem gemeinsamen Gerät, insbesondere Tischgerät, vorzugsweise Schrumpfspanngerät, zusammengefasst sind. Insbesondere weist das Schrumpfspanngerät ein gemeinsames Gehäuse auf, welches zumindest teilweise die Schrumpfspannabkühlvorrichtung zusammen mit der Induktionsheizeinheit und/oder zusammen mit der Längenmesseinrichtung umfasst.

Wenn das Schrumpfspanngerät außerdem zumindest eine integrierte weitere Induktionsheizeinheit zur thermischen Aufweitung von Werkzeugaufnahmen mittels induktiven Erhitzens, wobei die Induktionsheizeinheit eine erste Induktionsspuleneinrichtung aufweist und wobei die weitere Induktionsheizeinheit eine zweite Induktionsspuleneinrichtung aufweist, welche wesentlich verschieden von der ersten Induktionsspuleneinrichtung ausgebildet ist, kann vorteilhaft eine besonders hohe Flexibilität erreicht werden. Vorteilhaft können Werkzeuge und/oder Werkzeugaufnahmen verschiedener Größen, verschiedener Außenformen und/oder verschiedener Materialien mittels desselben Schrumpfgeräts, vorzugsweise ohne, dass Modifikationen oder Umbauten an dem Schrumpfgerät vorgenommen werden müssen, eingeschrumpft und/oder ausgeschrumpft werden. Insbesondere weisen die erste Induktionsspuleneinrichtung und die zweite Induktionsspuleneinrichtung Aufnahmebereiche, bzw. Heizbereiche unterschiedlicher Größe, beispielsweise unterschiedlicher Länge oder unterschiedlichen Durchmessers, und/oder Induktionsspulen unterschiedlicher Ausgestaltung, beispielsweise mit unterschiedlichen Wicklungszahlen, unterschiedlichen Wicklungsdichten und/oder unterschiedlichen Wicklungsdrahtdurchmessern, was beispielsweise zur Erzeugung unterschiedlich starker maximaler Induktionsmagnetfelder durch die erste Induktionsspuleneinrichtung und durch die zweite Induktionsspuleneinrichtung dienen kann, auf.

Ferner wird ein Werkzeug-Schrumpfspannverfahren mit einem Abkühlschritt, in dem eine, zuvor in einem Aufheizschritt durch Erhitzen, beispielsweise in einem Schrumpfspannaufheizschritt oder in einem Heißdampfreinigungsschritt, aufgeweitete, Werkzeugaufnahme in dem Kühlbehälter, welcher einen Aufnahmeraum zur Aufnahme zumindest der, eine Werkzeugaufnahme und ein Werkzeug umfassenden, Werkzeugeinheit ausbildet, und welcher das, insbesondere durch das Klimagerät, aktiv gekühlte Kühlgas oder Kühlgasgemisch, insbesondere Kühlluft, beinhaltet, abgekühlt wird, vorgeschlagen. Dadurch können insbesondere vorteilhafte Eigenschaften hinsichtlich einer Kühlung von Werkzeugaufnahmen und/oder Werkzeugeinheiten, insbesondere in einem Schrumpfspannprozess und/oder in einem Heißdampfreinigungsprozess, erreicht werden. Vorteilhaft kann eine von der Kontur der Werkzeugaufnahme und/oder der Werkzeugeinheit unabhängige Kühlung, vorzugsweise Komplettkühlung der Werkzeugaufnahme und/oder der Werkzeugeinheit, erreicht werden.

Des Weiteren wird vorgeschlagen, dass das Kühlgas oder das Kühlgasgemisch in dem Kühlbehälter und/oder der Kühlbehälter selbst vor dem Abkühlschritt, insbesondere vor einer Einlagerung der in dem Abkühlschritt zu kühlenden Werkzeugeinheit oder Werkzeugaufnahme in den Kühlbehälter, vorgekühlt wird. Dadurch können insbesondere vorteilhafte Eigenschaften hinsichtlich einer Kühlung von Werkzeugaufnahmen und/oder Werkzeugeinheiten, insbesondere in einem Schrumpfspannprozess, erreicht werden. Vorteilhaft kann eine möglichst kurze Kühldauer bis zu einem Erreichen einer Zieltemperatur erreicht werden. Vorteilhaft kann dadurch eine hohe Taktzahl und/oder ein hoher Durchlauf von Werkzeugeinheiten erreicht werden. Insbesondere kann das beschriebene Verfahren, insbesondere der Abkühlschritt, auch in einem Heißdampfreinigungsprozess angewandt werden, bei dem die zu reinigenden Werkzeuge, Werkzeugaufnahmen, Spannzangen oder Werkzeugeinheiten durch den Reinigungsdampf aufgeheizt wurden.

Die erfindungsgemäße Schrumpfspannabkühlvorrichtung, das erfindungsgemäße System, das erfindungsgemäße Schrumpfspanngerät und das erfindungsgemäße Werkzeug-Schrumpfspannverfahren können zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Systems mit einer Schrumpfspannabkühlvorrichtung und einem Handhabungsroboter,
- Fig. 2: eine schematische perspektivische Ansicht der Schrumpfspannabkühlvorrichtung,
- Fig. 3: ein schematisches Ablaufdiagramm eines Werkzeug-Schrumpfspannverfahrens und
- Fig. 4: eine schematische perspektivische Ansicht einer alternativen Schrumpfspannabkühlvorrichtung
- Fig. 5: eine schematische Vorderansicht auf ein Schrumpfspanngerät mit einer zweiten alternativen Schrumpfspannabkühlvorrichtung,
- Fig. 6a: eine schematische Draufsicht auf einen Kühlbehälter der zweiten alternativen Schrumpfspannabkühlvorrichtung mit einer Werkzeugeinheit in einer Kühlposition,
- Fig. 6b: eine schematische Draufsicht auf den Kühlbehälter mit der Werkzeugeinheit in einer Ein- und/oder Auslagerposition,
- Fig. 6c: eine schematische Seitenansicht auf den Kühlbehälter und
- Fig. 7: eine schematische Draufsicht auf eine dritte alternative Schrumpfspannabkühlvorrichtung.

### Beschreibung der Ausführungsbeispiele

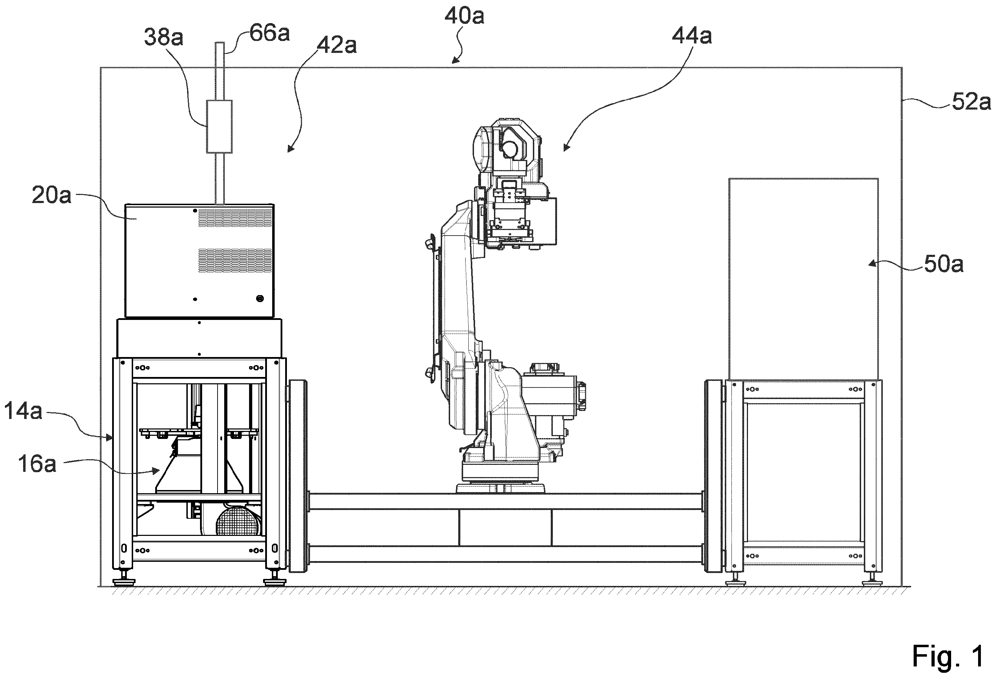

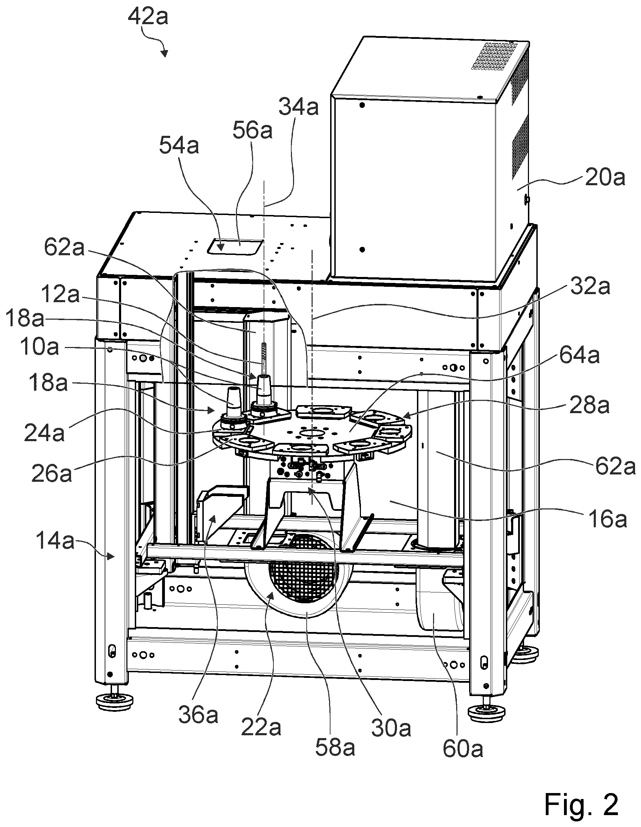

Die Fig. 1 zeigt ein System 40a mit einer Schrumpfspannabkühlvorrichtung 42a. Die Schrumpfspannabkühlvorrichtung 42a ist zu einer konturunabhängigen Temperierung, vorzugsweise Abkühlung, von zuvor aufgeheizten Werkzeugeinheiten 18a vorgesehen. Eine Werkzeugeinheit 18a umfasst eine Werkzeugaufnahme 10a und ein in der Werkzeugaufnahme 10a montiertes Werkzeug 12a (vgl. Fig. 2). Das System 40a weist einen Handhabungsroboter 44a auf. Der Handhabungsroboter 44a ist zu einer automatischen Bestückung der Schrumpfspannabkühlvorrichtung 42a mit Werkzeugeinheiten 18a vorgesehen. Der Handhabungsroboter 44a ist zu einer automatischen Entnahme von Werkzeugeinheiten 18a aus der Schrumpfspannabkühlvorrichtung 42a vorgesehen. Das System 40a weist eine Aufheizvorrichtung 50a auf. Die Aufheizvorrichtung 50a kann als eine Induktionsheizvorrichtung zu einem Aufheizen von Werkzeugaufnahmen 10a oder als eine Heißdampfreinigungsvorrichtung z.B. zu Reinigung von Werkzeugaufnahmen 10a ausgebildet sein. Aus Gründen der Übersichtlichkeit sind in der Fig. 1 keine weiteren Details zu der Aufheizvorrichtung gezeigt. Der Handhabungsroboter 44a ist zu einer automatischen Bestückung der Aufheizvorrichtung 50a mit Werkzeugeinheiten 18a vorgesehen. Der Handhabungsroboter 44a ist zu einer automatischen Entnahme von Werkzeugeinheiten 18a aus der Aufheizvorrichtung 50a vorgesehen. Das System 40a bildet einen Teil einer Multispann- und Mess- und/oder Einstellstation für Werkzeuge 12a aus. Das System 40a umfasst ein Gehäuse 52a. Das Gehäuse 52a umfasst einen Kamin 66a. Der Kamin 66a ist zu einer Abführung von aufgewärmter Kühlluft vorgesehen. Die Schrumpfspannabkühlvorrichtung 42a umfasst eine Kondenswasser-Auffangeinrichtung 38a. Die Kondenswasser-Auffangeinrichtung 38a ist in der Fig. 1 beispielhaft dem Kamin 66a zugeordnet. Alternativ oder zusätzlich könnte die Kondenswasser-Auffangeinrichtung 38a auch einem Klimagerät 20a der Schrumpfspannabkühlvorrichtung 42a oder einem Kühlbehälter 14a der Schrumpfspannabkühlvorrichtung 42a zugeordnet sein.

Die Fig. 2 zeigt die Schrumpfspannabkühlvorrichtung 42a in einer weiteren perspektivischen Ansicht. Die Schrumpfspannabkühlvorrichtung 42a weist den Kühlbehälter 14a auf. Der Kühlbehälter 14a bildet einen Aufnahmeraum 16a aus. Der durch den Kühlbehälter 14a ausgebildete Aufnahmeraum 16a ist zur Aufnahme von mehreren Werkzeugeinheiten 18a vorgesehen. Der Aufnahmeraum 16a ist ausreichend groß für die Aufnahme von acht oder mehr Werkzeugeinheiten 18a. Der Aufnahmeraum 16a ist zu einem Großteil von dem Kühlbehälter 14a umschlossen. **In** den Figuren 1 und 2 sind der Übersichtlichkeit halber und um eine Einsicht in den Aufnahmeraum 16a zu gewährleisten die Seitenwände des Kühlbehälters 14a teilweise entfernt und/oder ausgeblendet. Vorteilhaft umschließt der Kühlbehälter 14a den Aufnahmeraum 16a vollständig mit Ausnahme einer Ein- und/oder Auslageröffnung 54a. Die Ein- und/oder Auslageröffnung 54a ist verschließbar. Der Kühlbehälter 14a umfasst einen Deckel 56a, welcher dazu vorgesehen ist, die Ein- und/oder Auslageröffnung 54a zu verschließen.

Der Kühlbehälter 14a ist frei von Bauteilen, die eine Flüssigkeit führen, ausgebildet. Der Kühlbehälter 14a ist frei von Bauteilen, die eine Flüssigkeit verspritzen, ausgebildet. Der Kühlbehälter 14a ist frei von Bauteilen, die eine Flüssigkeit versprühen, ausgebildet. Der Kühlbehälter 14a ist frei von Bauteilen, die einen Dampf führen, ausgebildet. Der Kühlbehälter 14a ist frei von Bauteilen, die einen Dampf verspritzen, ausgebildet. Der Kühlbehälter 14a ist frei von Bauteilen, die einen Dampf versprühen, ausgebildet. Der Kühlbehälter 14a ist nicht dazu geeignet, mit einer Flüssigkeit befüllt zu werden. Der Kühlbehälter 14a kann, insbesondere rundum, eine Wärmeisolierung (nicht gezeigt) aufweisen, welche, beispielsweise vergleichbar zu einem Kühlschrank, einen Wärmeeintrag von einer Umgebung des Kühlbehälters 14a in den Aufnahmeraum 16a reduziert und bevorzugt möglichst unterbindet. Die Wärmeisolierung umfasst dazu dem Fachmann bekannte Isolationselemente, beispielsweise Schaumstoffplatten oder Vakuumpaneele.

Die Schrumpfspannabkühlvorrichtung 42a weist das Klimagerät 20a auf. Es ist auch denkbar, dass die Schrumpfspannabkühlvorrichtung 42a mehr als ein Klimagerät 20a aufweist. Das Klimagerät 20a ist an einer Außenseite des Kühlbehälters 14a befestigt. Das Klimagerät 20a ist außerhalb des Aufnahmeraums 16a angeordnet. Das Klimagerät 20a ist auf einer Oberseite des Kühlbehälters 14a angeordnet. Alternativ könnte das Klimagerät 20a jedoch auch an einer anderen Seite des Kühlbehälters 14a, getrennt von dem Kühlbehälter 14a oder sogar zumindest teilweise innerhalb des Aufnahmeraums 16a angeordnet sein. Das Klimagerät 20a ist dazu vorgesehen, ein in dem Aufnahmeraum 16a des Kühlbehälters 14a enthaltenes Kühlgas oder Kühlgasgemisch zur Abkühlung der in dem Aufnahmeraum 16a gelagerten Werkzeugeinheiten 18a aktiv zu kühlen. Das Klimagerät 20a ist über eine Kühlluftzuleitung und/oder über eine Leitung zur Ableitung von erwärmter Luft mit dem Aufnahmeraum 16a des Kühlbehälters 14a leitungsverbunden. Das Klimagerät 20a ist als eine Klimaanlage, vorzugsweise als ein Kältegerät zur Abkühlung von Luft, insbesondere zu Erzeugung eines Kühlluftstroms, vorgesehen. Insbesondere weist die Kühlluft des Kühlluftstroms eine Kühltemperatur, welche unterhalb der Raumtemperatur, vorzugsweise unterhalb von 15°C, vorteilhaft unterhalb von 10°C, besonders vorteilhaft unterhalb von 7°C, bevorzugt unterhalb von 3°C, und besonders bevorzugt zur Vermeidung von Vereisungen oberhalb von 0°C, liegt. Es sind jedoch theoretisch auch Temperaturen unterhalb von 0°C möglich. Das Klimagerät 20a ist dazu vorgesehen, das Kühlgas oder das Kühlgasgemisch, vorzugsweise die Kühlluft, in dem Kühlbehälter 14a, beispielsweise auf die Kühltemperatur, vorzukühlen. Die Luft in dem Aufnahmeraum 16a ist von dem Klimagerät 20a, beispielsweise auf die Kühltemperatur, vorgekühlt. Das Klimagerät 20a ist alternativ oder zusätzlich dazu vorgesehen, die Innenwände des Kühlbehälters 14a bis zur Kühltemperatur vorzukühlen, vorzugsweise auf die Kühltemperatur zu bringen.

Die Schrumpfspannabkühlvorrichtung 42a weist eine Umwälzeinheit 22a auf. Die Umwälzeinheit 22a ist dazu vorgesehen, eine zumindest im Wesentlichen gleichmäßige Temperaturverteilung innerhalb des Kühlbehälters 14a herzustellen. Die Umwälzeinheit 22a ist dazu vorgesehen, die Kühlluft in dem gesamten Aufnahmeraum 16a etwa auf der Kühltemperatur zu halten. Die Umwälzeinheit 22a umfasst zwei Gebläse 58a, 60a. Die Gebläse 58a, 60a sind in dem Aufnahmeraum 16a angeordnet. Die Gebläse 58a, 60a sind derart relativ zueinander angeordnet, dass sie Luftströmungen erzeugen, welche die Kühlluft gleichmäßig in dem Aufnahmeraum 16a verteilen und/oder zirkulieren lassen. Die Gebläse 58a, 60a sind an jeweils unterschiedlichen Innenseiten des Aufnahmeraums 16a angeordnet. Es ist jedoch auch denkbar, dass die Gebläse 58a, 60a zumindest abschnittsweise in ein Zentrum des Aufnahmeraums 16a hineinragen. Die Gebläse 58a, 60a sind in einer unteren Hälfte des Aufnahmeraums 16a angeordnet. Eine Anordnung in einer oberen Hälfte des Aufnahmeraums 16a ist jedoch alternativ auch denkbar. Die Gebläse 58a, 60a sind über Zu- und/oder Ableitungen 62a mit dem Klimagerät 20a verbunden.

Die Schrumpfspannabkühlvorrichtung 42a weist eine Halteeinrichtung 28a zur Halterung von zumindest zwei Werkzeugeinheiten 18a auf. Die Halteeinrichtung 28a ist (vollständig) in dem Aufnahmeraum 16a des Kühlbehälters 14a angeordnet. Die Halteeinrichtung 28a weist in dem in der Fig. 2 gezeigten Ausführungsbeispiel acht Taktplätze 24a, 26a auf. Die in der Fig. 2 beispielhaft gezeigte Halteeinrichtung 28a ist als ein Halteteller mit ringförmig zueinander angeordneten Taktplätzen 24a, 26a ausgebildet. Die Taktplätze 24a, 26a umfassen jeweils eine Aufnahmeöffnung, in welche jeweils eine Werkzeugeinheit 18a positioniert werden kann. Die Aufnahmeöffnungen der Taktplätze 24a, 26a sind auf die jeweiligen zu halternden Werkzeugeinheiten 18a angepasst. Die Taktplätze 24a, 26a sind an einer Halteeinrichtungsbasis 64a befestigt. Die Taktplätze 24a, 26a sind austauschbar an der Halteeinrichtungsbasis 64a montiert. Die Halteeinrichtung 28a ist flexibel mit unterschiedlichen Taktplätzen 24a, 26a bestückbar, welche vorzugsweise jeweils für bestimmte Werkzeugeinheiten 18a angepasst sind. Alternativ ist denkbar, dass der gesamte Halteteller austauschbar ist oder, dass unterschiedliche Adaptereinsätze in die Aufnahmeöffnungen der Taktplätze 24a, 26a einsetzbar sind.

Die Halteeinrichtung 28a ist beweglich gelagert. Die Halteeinrichtung 28a weist eine Antriebseinheit 30a auf. Die Antriebseinheit 30a ist dazu vorgesehen, die Halteeinrichtung 28a durch eine Bewegung der Halteeinrichtung 28a, insbesondere der Taktplätze 24a, 26a in eine Taktplatz-Einlagerposition oder in eine Taktplatz-Auslagerposition zu verbringen. Die Antriebseinheit 30a ist dazu vorgesehen, die Taktplätze 24a, 26a der Halteeinrichtung 28a rotatorisch um eine Antriebsrotationsachse 32a der Halteeinrichtung 28a zu bewegen. Die Antriebsrotationsachse 32a der Antriebseinheit 30a ist vertikal ausgerichtet. Die Antriebsrotationsachse 32a der Antriebseinheit 30a ist parallel zu einer Werkzeugrotationsachse 34a von in der Halteeinrichtung 28a gehalterten Werkzeugeinheiten 18a oder Werkzeugaufnahmen 10a ausgerichtet. Die Antriebsrotationsachse 32a der Antriebseinheit 30a verläuft zentral durch die Halteeinrichtung 28a, insbesondere durch eine Schwerpunktachse der Halteeinrichtung 28a. Die Antriebsrotationsachse 32a der Antriebseinheit 30a ist senkrecht zu einer Tellerebene des Haltetellers ausgerichtet. Alle Taktplätze 24a, 26a der Halteeinrichtung 28a weisen einen in etwa gleichen Abstand von der Antriebsrotationsachse 32a auf.

Die Schrumpfspannabkühlvorrichtung 42a weist eine Ein- und/oder Auslagereinheit 36a auf. Die Ein- und/oder Auslagereinheit 36a ist getrennt von der Halteeinrichtung 28a ausgebildet. Die Ein- und/oder Auslagereinheit 36a ist (vollständig) in dem Aufnahmeraum 16a des Kühlbehälters 14a angeordnet. Die Ein- und/oder Auslagereinheit 36a ist zu einer Einlagerung der Werkzeugeinheiten 18a in den Aufnahmeraum 16a des Kühlbehälters 14a vorgesehen. Die Ein- und/oder Auslagereinheit 36a ist zu einer Positionierung der eingelagerten Werkzeugeinheiten 18a in einem Taktplatz 24a, 26a der Halteeinrichtung 28a vorgesehen. Die Ein- und/oder Auslagereinheit 36a ist zu einer Auslagerung der Werkzeugeinheiten 18a aus dem Aufnahmeraum 16a des Kühlbehälters 14a vorgesehen. Die Ein- und/oder Auslagereinheit 36a ist zu einer Entnahme der eingelagerten Werkzeugeinheiten 18a aus einem der Taktplätze 24a, 26a der Halteeinrichtung 28a vorgesehen. Die in der Fig. 2 beispielhaft dargestellte Ein- und/oder Auslagereinheit 36a ist als eine Linearhubeinheit ausgebildet. Alternative Ausgestaltungen der Ein- und/oder Auslagereinheit 36a, beispielsweise als eine Schwenkeinheit oder als eine mehrachsige Hubeinheit, sind selbstverständlich denkbar. Die Ein- und/oder Auslagereinheit 36a ist dazu vorgesehen, Werkzeugeinheiten 18a zwischen der Halteeinrichtung 28a und der Ein- und/oder Auslageröffnung 54a zu transportieren. Es ist denkbar, dass die Ein- und/oder Auslagereinheit 36a zumindest teilweise einstückig mit dem Deckel 56a ausgebildet ist. Beispielsweise könnte die Ein- und/oder Auslagereinheit 36a in einer bestimmten Position, beispielsweise in einer Position, in der die Ein- und/oder Auslagereinheit 36a bereit ist für eine Aufnahme einer aufgewärmten Werkzeugeinheit 18a, die Ein- und/oder Auslageröffnung 54a wie ein Deckel 56a verschlossen halten. Alternativ kann jedoch der Deckel 56a selbstverständlich auch getrennt von der Ein- und/oder Auslagereinheit 36a ausgebildet ein und sich lediglich dann öffnen, wenn die Ein- und/oder Auslagereinheit 36a eine Werkzeugeinheit 18a (von dem Handhabungsroboter 44a) aufnimmt oder (an den Handhabungsroboter 44a) übergibt.

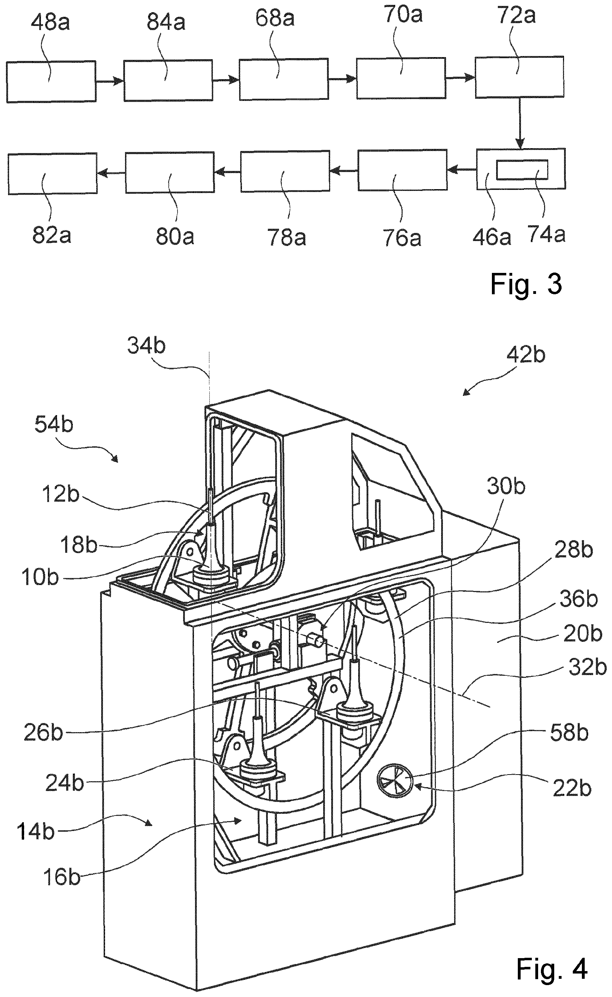

Die Fig. 3 zeigt ein schematisches Ablaufdiagramm eines Werkzeug-Schrumpfspannverfahrens mit der Schrumpfspannabkühlvorrichtung 42a. In zumindest einem Aufheizschritt 48a wird eine Werkzeugaufnahme 10a einer Werkzeugeinheit 18a oder dergleichen durch Erhitzen thermisch aufgeweitet. Die Erhitzung in dem Aufheizschritt 48a findet vorzugsweise durch eine Induktionsheizeinheit eines Schrumpfspanngeräts oder alternativ auch durch ein Heißdampfreinigungsgerät statt. In zumindest einem Verfahrensschritt 84a wird die Ein- und/oder Auslagereinheit 36a in eine aufnahmebereite Position an oder oberhalb der Ein- und/oder Auslageröffnung 54a verbracht. In zumindest einem weiteren Verfahrensschritt 68a wird die zuvor in dem Aufheizschritt 48a erhitzte Werkzeugeinheit 18a durch den Handhabungsroboter 44a auf die Ein- und/oder Auslagereinheit 36a aufgesetzt. In zumindest einem weiteren Verfahrensschritt 70a wird die heiße Werkzeugeinheit 18a von der Ein- und/oder Auslagereinheit 36a in den Aufnahmeraum 16a des Kühlbehälters 14a abgesenkt. In zumindest einem weiteren Verfahrensschritt 72a wird die heiße Werkzeugeinheit 18a von der Ein- und/oder Auslagereinheit 36a in einen ersten Taktplatz 24a der Halteeinrichtung 28a eingesetzt. In einem Abkühlschritt 46a wird die Werkzeugeinheit 18a gleichmäßig durch das aktiv durch das Klimagerät 20a gekühlte Kühlgas oder Kühlgasgemisch, insbesondere durch die Kühlluft, abgekühlt. Das Kühlgas oder das Kühlgasgemisch, insbesondere die Kühlluft, in dem Kühlbehälter 14a wird vor dem Abkühlschritt 46a, insbesondere vor einer Einlagerung der in dem Abkühlschritt 46a zu kühlenden Werkzeugeinheit 18a in den Kühlbehälter 14a, von dem Klimagerät 20a und der Umwälzeinheit 22a vorgekühlt. Während des Abkühlschritts 46a wird in einem Verfahrensschritt 74a die Halteeinrichtung 28a um einen Taktplatz weiter rotiert. In zumindest einem oder mehreren Verfahrensschritten 76a wird eine nächste Werkzeugeinheit mittels der Ein- und/oder Auslagereinheit 36a in den nächsten Taktplatz 26a der Halteeinrichtung 28a eingesetzt. Diese Schritte werden mehrfach wiederholt. Nach einigen (in dem gezeigten Ausführungsbeispiel acht) Rotationsschritten der Halteeinrichtung 28a vollbringt die mittlerweile abgekühlte Werkzeugeinheit 18a in dem ersten Taktplatz 24a eine vollständige (360°) Umdrehung. In zumindest einem weiteren Verfahrensschritt 78a wird die abgekühlte Werkzeugeinheit 18a von der Ein- und/oder Auslagereinheit 36a aus dem ersten Taktplatz 24a entnommen und über die Ein- und/oder Auslageröffnung 54a aus dem Aufnahmeraum 16a entfernt. In zumindest einem weiteren Verfahrensschritt 80a entnimmt der Handhabungsroboter 44a die abgekühlte Werkzeugeinheit 18a aus der Ein- und/oder Auslagereinheit 36a und setzt stattdessen erneut eine weitere aufgeheizte Werkzeugeinheit 18a in die Ein- und/oder Auslagereinheit 36a ein, welche diese wiederum in den nun freigewordenen ersten Taktplatz 24a einsetzt. In zumindest einem weiteren Verfahrensschritt 82a wird die abgekühlte Werkzeugeinheit 18a von dem Handhabungsroboter 44a zu einem Werkzeugeinstell- und/oder Werkzeugmessgerät (nicht gezeigt) transportiert und dort zumindest vermessen.

In den Figuren 4 bis 7 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 7 ist der Buchstabe a durch die Buchstaben b bis d ersetzt.

Die Fig. 4 zeigt eine alternative Schrumpfspannabkühlvorrichtung 42b in einer perspektivischen Ansicht. Die alternative Schrumpfspannabkühlvorrichtung 42b weist einen Kühlbehälter 14b auf. Der Kühlbehälter 14b umfasst eine Ein- und/oder Auslageröffnung 54b. Die Ein- und/oder Auslageröffnung 54b ist mittels eines (in der Fig. 4 nicht gezeigten) Deckels verschließbar. Die alternative Schrumpfspannabkühlvorrichtung 42b weist ein Klimagerät 20b auf. Das Klimagerät 20b ist seitlich an einer Außenseite des Kühlbehälters 14b befestigt. Die alternative Schrumpfspannabkühlvorrichtung 42b weist eine alternative Halteeinrichtung 28b zur Halterung von zumindest zwei Werkzeugeinheiten 18b auf. Die alternative Halteeinrichtung 28b ist (vollständig) in einem Aufnahmeraum 16b des Kühlbehälters 14b angeordnet. Die alternative Halteeinrichtung 28b weist in dem in der Fig. 4 gezeigten Ausführungsbeispiel sechs Taktplätze 24b, 26b auf. Die alternative Halteeinrichtung 28b ist beweglich gelagert. Die alternative Halteeinrichtung 28b weist eine Antriebseinheit 30b auf. Die Antriebseinheit 30b ist dazu vorgesehen, die Taktplätze 24b, 26b der alternative Halteeinrichtung 28b rotatorisch um eine Antriebsrotationsachse 32b der Halteeinrichtung 28b zu bewegen. Die Antriebsrotationsachse 32b der Antriebseinheit 30b ist horizontal ausgerichtet. Die Antriebsrotationsachse 32b der Antriebseinheit 30b ist senkrecht zu einer Werkzeugrotationsachse 34b von in der Halteeinrichtung 28b gehalterten Werkzeugeinheiten 18b ausgerichtet. Die Antriebsrotationsachse 32b der Antriebseinheit 30b verläuft zentral durch die Halteeinrichtung 28b, insbesondere durch eine Schwerpunktachse der alternativen Halteeinrichtung 28b. Die Antriebsrotationsachse 32b der Antriebseinheit 30b ist senkrecht zu einer Radachse des Halterads ausgerichtet.

Die in der Fig. 4 beispielhaft gezeigte alternative Halteeinrichtung 28b ist als ein aufrechtes Halterad mit rund um den Umfang des Halterads angeordneten Taktplätzen 24b, 26b ausgebildet. Die in der Fig. 4 beispielhaft gezeigte alternative Halteeinrichtung 28b ist riesenradartig ausgebildet. Die Taktplätze 24b, 26b der alternativen Halteeinrichtung 28b sind relativ zu dem Halterad rotierbar an dem Halterad befestigt. Die Taktplätze 24b, 26b sind derart an dem Halterad rotierend befestigt, dass die in den Taktplätzen 24b, 26b aufgenommenen Werkzeugeinheiten 18b wie Gondeln eines Riesenrads in jeder Rotationsposition der alternativen Halteeinrichtung 28b horizontal ausgerichtet sind. Die alternative Schrumpfspannabkühlvorrichtung 42b weist eine Ein- und/oder Auslagereinheit 36b auf. Die Ein- und/oder Auslagereinheit 36b ist zu einer Einlagerung der Werkzeugeinheiten 18b in den Kühlbehälter 14b und zu einer Auslagerung der Werkzeugeinheiten 18b aus dem Kühlbehälter 14b vorgesehen. Die Ein- und/oder Auslagereinheit 36b ist einstückig mit der alternativen Halteeinrichtung 28b ausgebildet. Die alternative Halteeinrichtung 28b bildet zugleich die Ein- und/oder Auslagereinheit 36b aus.

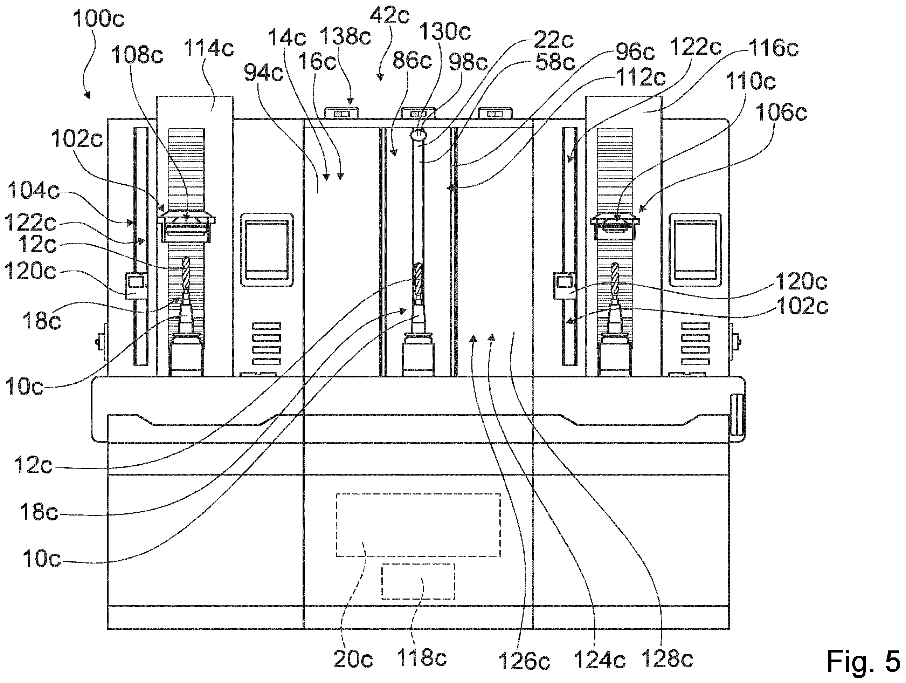

In der Fig. 5 ist eine schematische Vorderansicht auf ein Schrumpfspanngerät 100c dargestellt. Das Schrumpfspanngerät 100c weist eine zweite alternative Schrumpfspannabkühlvorrichtung 42c auf. Die Schrumpfspannabkühlvorrichtung 42c ist in das Schrumpfspanngerät 100c integriert. Das Schrumpfspanngerät 100c weist eine Induktionsheizeinheit 102c auf. Die Induktionsheizeinheit 102c ist in das Schrumpfspanngerät 100c integriert. Das Schrumpfspanngerät 100c weist eine weitere Induktionsheizeinheit 106c auf. Die weitere Induktionsheizeinheit 106c ist in das Schrumpfspanngerät 100c integriert. Die Induktionsheizeinheit 102c und die weitere Induktionsheizeinheit 106c sind zur thermischen Aufweitung von Werkzeugaufnahmen 10c mittels induktiven Erhitzens zumindest von Teilbereichen der Werkzeugaufnahmen 10c vorgesehen. Die Induktionsheizeinheit 102c weist eine erste Induktionsspuleneinrichtung 108c auf. Die weitere Induktionsheizeinheit 106c weist eine zweite Induktionsspuleneinrichtung 110c auf. Die Induktionsspuleneinrichtungen 108c, 110c umfassen Induktionsmagnetfelder erzeugende Induktionsspulen. Die erste Induktionsspuleneinrichtung 108c und die zweite Induktionsspuleneinrichtung 110c sind wesentlich verschieden voneinander ausgebildet. Die erste Induktionsspuleneinrichtung 108c ist größer als die zweite Induktionsspuleneinrichtung 110c. Die erste Induktionsspuleneinrichtung 108c weist eine größere Vertikalerstreckung als die zweite Induktionsspuleneinrichtung 110c auf. Die erste Induktionsspuleneinrichtung 108c weist einen Werkzeugeinheiten-Aufnahmebereich auf, welcher einen größeren Durchmesser besitzt als der Werkzeugeinheiten-Aufnahmebereich der zweiten Induktionsspuleneinrichtung 110c. Die erste Induktionsspuleneinrichtung 108c ist zu einer Erzeugung einer unterschiedlichen, insbesondere größeren, Heizenergie vorgesehen als die zweite Induktionsspuleneinrichtung 110c.

Die Induktionsheizeinheiten 102c,106c sind auf einander gegenüberliegenden Seiten der Schrumpfspannabkühlvorrichtung 42c angeordnet. Die Induktionsspuleneinrichtungen 108c, 110c sind jeweils an einem Turm 114c, 116c des Schrumpfspanngeräts 100c beweglich, insbesondere vertikalbeweglich, gelagert. Durch die Bewegung entlang der Vertikalerstreckung des jeweiligen Turms 114c, 116c sind die Induktionsspuleneinrichtungen 108c, 110c über unterhalb des Turms 114c, 116c in Heizpositionen positionierte Werkzeugeinheiten 18c stülpbar und/oder von den in den Heizpositionen positionierten Werkzeugeinheiten 18c abnehmbar. Das Schrumpfspanngerät 100c, insbesondere die Schrumpfspannabkühlvorrichtung 42c, weist eine Steuer- und/oder Regeleinheit 118c auf. Die Steuer- und/oder Regeleinheit 118c ist zumindest dazu vorgesehen, die Bewegungen der Induktionsspuleneinrichtungen 108c, 110c entlang der Türme 114c, 116c zu steuern. Die Steuer- und/oder Regeleinheit 118c ist zumindest dazu vorgesehen, die von den Induktionsspuleneinrichtungen 108c, 110c erzeugten Induktionsmagnetfelder zu aktivieren, zu deaktivieren, zu steuern und/oder zu regeln.

Das Schrumpfspanngerät 100c weist eine Längenmesseinrichtung 104c auf. Die Längenmesseinrichtung 104c ist zu einer Längenvermessung der Werkzeugeinheiten 18c, insbesondere der Kombination aus einem Werkzeug 12c und einer Werkzeugaufnahme 10c, vorgesehen. Die Längenmesseinrichtung 104c ist in das Schrumpfspanngerät 100c integriert. Die Längenmesseinrichtung 104c weist ein verfahrbares Längenmesselement 120c auf. Das Längenmesselement 120c ist vertikal entlang einer Schiene 122c der Längenmesseinrichtung 104c verfahrbar.

Die in der Fig. 5 gezeigte zweite alternative Schrumpfspannabkühlvorrichtung 42c weist neben einem einen Aufnahmeraum 16c ausbildenden Kühlbehälter 14c einen weiteren Kühlbehälter 86c auf. Der weitere Kühlbehälter 86c bildet einen weiteren Aufnahmeraum 112c aus. Der weitere Aufnahmeraum 112c ist wie der Aufnahmeraum 16c zur Aufnahme genau einer Werkzeugeinheit 18c vorgesehen. Die in der Fig. 5 gezeigte zweite alternative Schrumpfspannabkühlvorrichtung 42c weist einen zweiten weiteren Kühlbehälter 124c auf. Der zweite weitere Kühlbehälter 86c bildet einen zweiten weiteren Aufnahmeraum 126c aus. Der zweite weitere Aufnahmeraum 126c ist zur Aufnahme genau einer Werkzeugeinheit 18c vorgesehen. Die in der Fig. 5 gezeigte zweite alternative Schrumpfspannabkühlvorrichtung 42c weist drei Kühlbehälter 14c, 86c, 124c auf. Die Kühlbehälter 14c, 86c, 124c sind vollständig voneinander getrennt ausgebildet. Die Aufnahmeräume 16c, 112c, 126c sind zueinander überlappungsfrei. Die Aufnahmeräume 16c, 112c, 126c sind zumindest im Wesentlichen als vertikal ausgerichtete Zylinder ausgebildet. Andere Formen von Aufnahmeräumen 16c, 112c, 126c sind jedoch denkbar. Die Kühlbehälter 14c, 86c, 124c sind in einer Reihe nebeneinander angeordnet. Die Kühlbehälter 14c, 86c, 124c sind auf identischen Höhen relativ zueinander angeordnet. Die Kühlbehälter 14c, 86c, 124c sind in dem Schrumpfspanngerät 100c neben der Induktionsheizeinheit 102c und/oder neben der weiteren Induktionsheizeinheit 106c angeordnet. Die Kühlbehälter 14c, 86c, 124c sind mittig zwischen den beiden Induktionsheizeinheiten 102c, 106c des Schrumpfspanngeräts 100c angeordnet. Unterseiten der Kühlbehälter sind zumindest im Wesentlichen in einer Ebene mit Unterseiten der Induktionsheizeinheiten 102c, 106c angeordnet, so dass die Werkzeugeinheiten 18c bei einer Bewegung zwischen der Schrumpfspannabkühlvorrichtung 42c und der Induktionsheizeinheit 102c, 106c vorteilhaft nur in einer Ebene verschoben werden müssen. Zur Führung der Schiebebewegung sind Kulissenführungen denkbar.

Die Schrumpfspannabkühlvorrichtung 42c weist ein Klimagerät 20c auf. Das Klimagerät 20c ist dazu vorgesehen, die in dem Kühlbehälter 14c enthaltenen Kühlgase oder Kühlgasgemische und die in den weiteren Kühlbehältern 86c, 124c enthaltenen Kühlgase oder Kühlgasgemische unabhängig voneinander zu kühlen. Das Klimagerät 20c, insbesondere die Steuer- und/oder Regeleinheit 118c, ist dazu vorgesehen, die Zufuhr der gekühlten Kühlgase oder Kühlgasgemische zu dem Kühlbehälter 14a und zu den weiteren Kühlbehältern 86c, 124c unabhängig voneinander zu steuern und/oder zu regeln. Jeder Aufnahmeraum 16c, 112c, 126c ist unabhängig von den anderen Aufnahmeräumen 16c, 112c, 126c, insbesondere mittels des Klimageräts 20c, kühlbar.

Die Schrumpfspannabkühlvorrichtung 42c weist zumindest einen Temperatursensor 98c auf. Vorzugsweise weist jeder Kühlbehälter 14c, 86c, 124c mindestens einen eigenen Temperatursensor 98c auf. Jedem Kühlbehälter 14c, 86c, 124c ist ein Temperatursensor 98c zugeordnet. Die Temperatursensoren 98c sind dazu vorgesehen, eine Temperatur des Kühlgases oder Kühlgasgemischs innerhalb des jeweiligen Kühlbehälters 14c, 86c, 124c, dem der Temperatursensor 98c zugeordnet ist, zu sensieren. Die Temperatursensoren 98c sind dazu vorgesehen, eine Temperatur der in dem Kühlbehälter 14c, 86c, 124c angeordneten Werkzeugeinheit 18c zu sensieren. Der Kühlbehälter 14c weist einen Gasauslass 130c, insbesondere einen Luftauslass, auf. Der Temperatursensor 98c ist an dem Gasauslass 130c angeordnet. Der Temperatursensor 98c ist in einem Nahbereich des Gasauslasses 130c, welcher von Punkten gebildet wird, die höchstens 5 cm, vorzugsweise höchstens 2,5 cm, von dem Gasauslass 130c entfernt sind, angeordnet. Die Schrumpfspannabkühlvorrichtung 42c weist eine Temperatur-Anzeigeeinheit 138c auf. Die Temperatur-Anzeigeeinheit 138c ist dazu vorgesehen, die in den Kühlbehältern 14c, 86c, 124c von den zugehörigen Temperatursensoren 98c gemessenen Temperaturen anzuzeigen. In dem in der Fig. 5 dargestellten Ausführungsbeispiel umfasst die Temperatur-Anzeigeeinheit 138c zu jedem Kühlbehälter 14c, 86c, 124c je eine LED-Anzeige mit je zwei LED-Leuchten, welche anzeigen, ob die Werkzeugeinheit 18c in dem jeweiligen Kühlbehälter 14c, 86c, 124c noch heiß ist (rote Anzeige) oder bereits genug abgekühlt ist (grüne Anzeige).

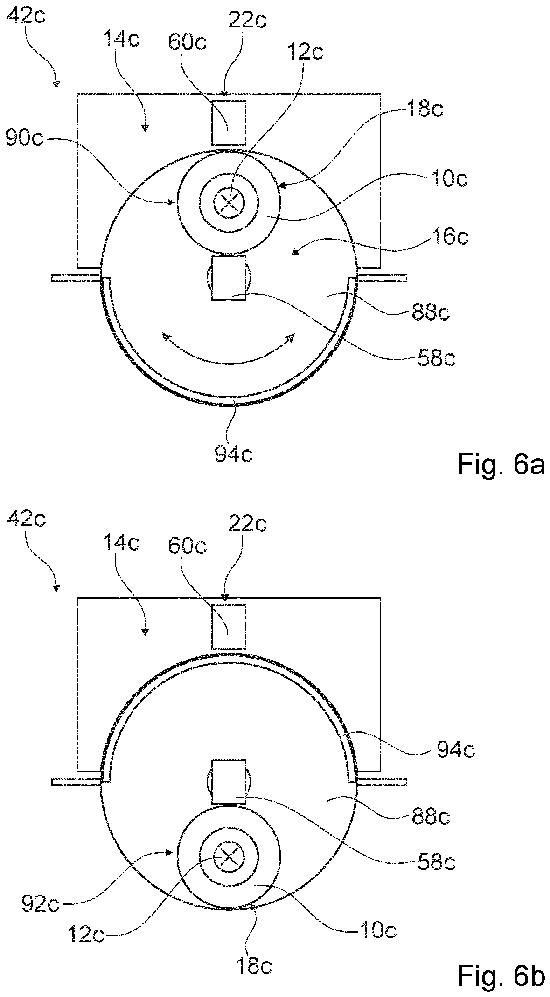

Der Kühlbehälter 14c weist ein Verschlusselement 94c auf. Der weitere Kühlbehälter 86c weist ein weiteres Verschlusselement 96c auf. Der zweite weitere Kühlbehälter 124c weist ein zweites weiteres Verschlusselement 128c auf. Die Verschlusselemente 94c, 96c, 128c sind dazu vorgesehen, die jeweiligen Aufnahmeräume 16c, 112c, 126c nach außen hin öffenbar abzuschließen. Die Verschlusselemente 94c, 96c, 128c bilden öffenbare Deckel für die Aufnahmeräume 16c, 112c, 126c aus. Die Verschlusselemente 94c, 96c, 128c sind separat voneinander bedienbar. Die Verschlusselemente 94c, 96c, 128c sind zur Auslösung von Öffnungs- und/oder Schließbewegungen separat voneinander durch die Steuer- und/oder Regeleinheit 118c ansteuerbar. Die Verschlusselemente 94c, 96c, 128c sind in Abhängigkeit von einer von dem Temperatursensor 98c detektierten Temperatur zumindest teilautomatisiert gesteuert. Die Steuer- und/oder Regeleinheit 118c initiiert eine Öffnungsbewegung des Verschlusselements 94c, 96c, 128c, sobald eine (vorgebbare) Grenztemperatur, beispielsweise 25°C oder 20°C oder eine Raumtemperatur, erreicht oder unterschritten ist. Die Steuer- und/oder Regeleinheit 118c initiiert eine Schließbewegung des Verschlusselements 94c, 96c, 128c, sobald eine Werkzeugeinheit 18c in den Kühlbehälter 14c, 86, 124c verbracht wurde. Die Steuer- und/oder Regeleinheit 118c initiiert eine Schließbewegung des Verschlusselements 94c, 96c, 128c, sobald eine Werkzeugeinheit 18c in einer Ein- und/oder Auslagerposition 92c (siehe auch Fig. 6b) des Kühlbehälters 14c, 86c, 124c detektiert wird oder sobald ein Bediener eine Schließbewegung der Verschlusselements 94c, 96c, 128c anfordert. Bei einem Öffnen des Verschlusselements 94c, 96c, 128c wird von der Steuer- und/oder Regeleinheit 118c automatisch die Zufuhr des Kühlgases und/oder Kühlgasgemischs zu dem jeweiligen Kühlbehälter 14c gestoppt.

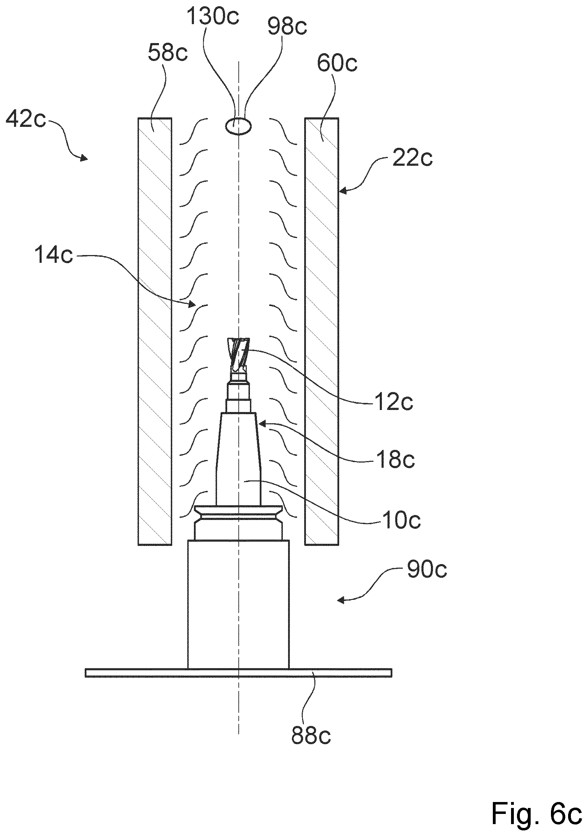

Die Figuren 6a und 6b zeigen schematische Draufsichten auf den Kühlbehälter 14c. In den Kühlbehälter 14c ist eine Werkzeugeinheit 18c eingestellt. Die Werkzeugeinheit 18c befindet sich in den Figuren 6a und 6b in unterschiedlichen Positionen des Kühlbehälters 14c. In der Fig. 6a befindet sich die Werkzeugeinheit 18c in einer Kühlposition 90c. In der Fig. 6b befindet sich die Werkzeugeinheit in der Ein- und/oder Auslagerposition 92c. Der Kühlbehälter 14c weist ein rotatorisch beweglich gelagertes Werkzeugeinheit-Aufstellelement 88c auf. Das Werkzeugeinheit-Aufstellelement 88c ist zur Lagerung genau einer Werkzeugeinheit 18c vorgesehen. Die Werkzeugeinheit 18c ist auf das Werkzeugeinheit-Aufstellelement 88c aufgestellt. Das Werkzeugeinheit-Aufstellelement 88c ist dazu vorgesehen, die auf dem Werkzeugeinheit-Aufstellelement 88c gelagerte Werkzeugeinheit 18c zwischen der Kühlposition 90c und der Ein- und/oder Auslagerposition 92c zu bewegen, insbesondere zu rotieren (vgl. Doppelpfeil in Fig. 6a). Die Schrumpfspannabkühlvorrichtung 42c weist eine Umwälzeinheit 22c auf. Die Umwälzeinheit 22c umfasst als Düsen ausgebildete Gebläse 58c, 60c (vgl. auch Fig. 6c). Die Gebläse 58c, 60c sind auf zwei gegenüberliegenden Seiten der sich in der Kühlposition 90c befindlichen Werkzeugeinheit 18c angeordnet. Die Umwälzeinheit 22c, insbesondere die Gebläse 58c, 60c, sind ortsfest relativ zu dem Kühlbehälter 14c und/oder dem Aufnahmeraum 16c angeordnet.

Das Verschlusselement 94c des Kühlbehälters 14c ist rotationsfest mit dem jeweiligen Werkzeugeinheit-Aufstellelement 88c des Kühlbehälters 14c verbunden. Das Verschlusselement 94c ist als ein Halbrohr ausgebildet. Das Verschlusselement 94c ist aus einem getönten Plexiglas, z.B. aus Makrolon, ausgebildet. Andere Formen und Materialien des Verschlusselements 94c sind jedoch denkbar. Eine Rotation des Werkzeugeinheit-Aufstellelements 88c zu einer Änderung der Positionierung der Werkzeugeinheit 18c in dem Aufnahmeraum 16c bewirkt somit zugleich auch ein Öffnen und Schließen des Aufnahmeraums 16c nach außen hin. Wenn sich die Werkzeugeinheit 18c in der Kühlposition 90c befindet, ist das Verschlusselement 94c geschlossen (vgl. Fig. 6a). Wenn sich die Werkzeugeinheit 18c in der Ein- und/oder Auslagerposition 92c befindet ist das Verschlusselement 94c geöffnet (vgl. Fig. 6b).

Die Fig. 6c zeigt eine schematische Seitenansicht auf den Kühlbehälter 14c ohne das Verschlusselement 94c. Es ist denkbar, dass das Schrumpfspanngerät 100c Handhabungselemente wie Pneumatikzylinder (nicht gezeigt) aufweist, welche dazu vorgesehen sind, die Werkzeugeinheit 18c zu einer Einlagerung in die Ein- und/oder Auslagerposition 92c zu bewegen oder die Werkzeugeinheit 18c zu einer Auslagerung von der Ein- und/oder Auslagerposition 92c wegzubewegen.

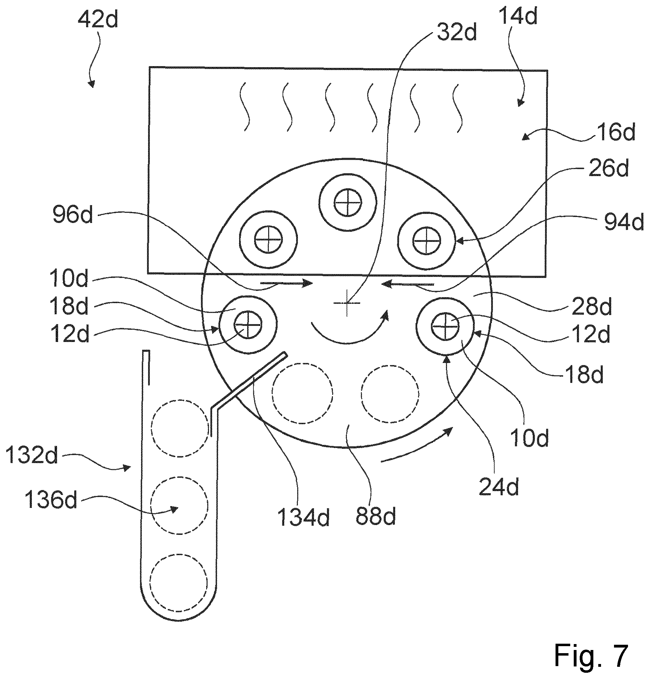

Die Fig. 7 zeigt eine schematische Darstellung einer dritten alternativen Schrumpfspannabkühlvorrichtung 42d in einer Draufsicht. Die Schrumpfspannabkühlvorrichtung 42d weist einen Kühlbehälter 14d auf. Der Kühlbehälter 14d bildet einen Aufnahmeraum 16d aus. Der durch den Kühlbehälter 14d ausgebildete Aufnahmeraum 16d ist zur Aufnahme von mehreren (im dargestellten Fall maximal drei) Werkzeugeinheiten 18d vorgesehen. In dem Aufnahmeraum 16d werden die Werkzeugeinheiten 18d abgekühlt. Der Aufnahmeraum 16d ist durch zwei Verschlusselemente 94d, 96d des Kühlbehälters 14d nach außen hin verschließbar. Die Verschlusselemente 94d, 96d sind durch eine Steuer- und/oder Regeleinheit 118d der Schrumpfspannabkühlvorrichtung 42d steuerbar. Die Schrumpfspannabkühlvorrichtung 42d weist eine Halteeinrichtung 28d zur Halterung mehreren Werkzeugeinheiten 18d auf. Die Halteeinrichtung 28d ist teilweise in dem Aufnahmeraum 16d des Kühlbehälters 14d angeordnet. Die Halteeinrichtung 28d weist in dem in der Fig. 7 gezeigten Ausführungsbeispiel sieben Taktplätze 24d, 26d auf. Die in der Fig. 7 beispielhaft gezeigte Halteeinrichtung 28d ist als ein Halteteller, insbesondere als ein rotierbares Werkzeugeinheit-Aufstellelement 88d, mit ringförmig zueinander angeordneten Taktplätzen 24d, 26d ausgebildet. Bei einer Rotation der Halteeinrichtung 28d werden nacheinander Werkzeugeinheiten 18d in den Kühlbehälter 14d eingeführt. Bei jedem Einführen einer Werkzeugeinheit 18d in den Kühlbehälter 14d wird zugleich eine weitere, bereits abgekühlte Werkzeugeinheit 18d aus dem Kühlbehälter entfernt.

Die Schrumpfspannabkühlvorrichtung 42d weist ein Auslagersystem 132d auf. Das Auslagersystem 132d umfasst eine Kulissenführung 134d, entlang welcher die abgekühlten und aus dem Kühlbehälter 14d entfernten Werkzeugeinheiten 18d von einer Rotationsbahn der rotierbaren Halteeinrichtung 28d abgelenkt und zu einem Sammelplatz 136d des Auslagersystems 132d umgeleitet werden. Die Halteeinrichtung 28d weist hinter der Kulissenführung 134d mehrere außerhalb des Kühlbehälters 14d angeordnete Taktplätze 24d, 26d auf, welche jeweils mit einer aufgeheizten Werkzeugeinheit 18d bestückbar sind. Die außerhalb des Kühlbehälters 14d und hinter der Kulissenführung 134d angeordneten Taktplätze 24d, 26d bilden eine Art Speicher aus, in den mehrere Werkzeugeinheiten 18d gleichzeitig einfüllbar sind. Dadurch kann vorteilhaft eine Bedienerfreundlichkeit erhöht werden, insbesondere indem der Bediener nicht jede Werkzeugeinheit 18d im Abstand der Taktgeschwindigkeit nacheinander aufstellen muss.

### Bezugszeichen

- 10: Werkzeugaufnahme
- 12: Werkzeug
- 14: Kühlbehälter
- 16: Aufnahmeraum
- 18: Werkzeugeinheit
- 20: Klimagerät
- 22: Umwälzeinheit
- 24: Taktplatz
- 26: Taktplatz
- 28: Halteeinrichtung
- 30: Antriebseinheit
- 32: Antriebsrotationsachse
- 34: Werkzeugrotationsachse
- 36: Ein- und/oder Auslagereinheit
- 38: Kondenswasser-Auffangeinrichtung
- 40: System
- 42: Schrumpfspannabkühlvorrichtung
- 44: Handhabungsroboter
- 46: Abkühlschritt
- 48: Aufheizschritt
- 50: Aufheizvorrichtung
- 52: Gehäuse
- 54: Ein- und/oder Auslageröffnung
- 56: Deckel
- 58: Gebläse
- 60: Gebläse
- 62: Zu- und/oder Ableitung
- 64: Halteeinrichtungsbasis
- 66: Kamin
- 68: Verfahrensschritt
- 70: Verfahrensschritt
- 72: Verfahrensschritt
- 74: Verfahrensschritt
- 76: Verfahrensschritt
- 78: Verfahrensschritt
- 80: Verfahrensschritt
- 82: Verfahrensschritt
- 84: Verfahrensschritt
- 86: Weiterer Kühlbehälter
- 88: Werkzeugeinheit-Aufstellelement
- 90: Kühlposition
- 92: Ein- und/oder Auslagerposition
- 94: Verschlusselement
- 96: Verschlusselement
- 98: Temperatursensor
- 100: Schrumpfspanngerät
- 102: Induktionsheizeinheit
- 104: Längenmesseinrichtung
- 106: Weitere Induktionsheizeinheit
- 108: Erste Induktionsspuleneinrichtung
- 110: Zweite Induktionsspuleneinrichtung
- 112: Weiterer Aufnahmeraum
- 114: Turm
- 116: Turm
- 118: Steuer- und/oder Regeleinheit
- 120: Längenmesselement
- 122: Schiene
- 124: Weiterer Kühlbehälter
- 126: Weiterer Aufnahmeraum
- 128: Verschlusselement
- 130: Gasauslass
- 132: Auslagersystem
- 134: Kulissenführung
- 136: Sammelplatz
- 138: Temperatur-Anzeigeeinheit

## Patentansprüche

1. Schrumpfspannabkühlvorrichtung (42a-d), zumindest zur, insbesondere konturunabhängigen, Temperierung von, insbesondere zuvor aufgeheizten, Werkzeugaufnahmen (10a-d) und/oder Werkzeugen (12a-d), mit zumindest einem Kühlbehälter (14a-d), welcher einen Aufnahmeraum (16a-d) zur Aufnahme zumindest einer, eine Werkzeugaufnahme (10a-d) und ein Werkzeug (12a-d) umfassenden, Werkzeugeinheit (18a-d) ausbildet, wobei die Schrumpfspannabkühlvorrichtung enie zumindest teilweise in dem Aufnahmeraum (16a-b; 16d) des Kühlbehälters (14a-b; 14d) angeordnete, zumindest zwei Taktplätze (24a-b, 26a-b; 24d, 26d) aufweisende und beweglich gelagerte Halteeinrichtung (28a-b; 28d) zur Halterung von zumindest zwei Werkzeugeinheiten (18a-b; 18d) aufweist, **gekennzeichnet durch** zumindest ein Klimagerät (20a-d), welches dazu vorgesehen ist, ein in dem Aufnahmeraum (16a-d) des Kühlbehälters (14a-d) enthaltenes Kühlgas oder Kühlgasgemisch, insbesondere Kühlluft, und/oder ein dem Aufnahmeraum (16a-d) des Kühlbehälters (14a-d) zugeführtes Kühlgas oder Kühlgasgemisch, insbesondere Kühlluft, zur Abkühlung der Werkzeugeinheit (18a-d) wesentlich zu temperieren, vorzugsweise aktiv zu kühlen, und durch zumindest eine Umwälzeinheit (22a-d), welche dazu vorgesehen ist, eine zumindest im Wesentlichen gleichmäßige Temperaturverteilung innerhalb des Kühlbehälters (14a-d) herzustellen.

2. Schrumpfspannabkühlvorrichtung (42a-d) nach Anspruch 1, **dadurch gekennzeichnet, dass** der Kühlbehälter (14a-d) frei ist von
- Bauteilen, die eine Flüssigkeit führen,
- Bauteilen, die eine Flüssigkeit verspritzen,
- Bauteilen, die eine Flüssigkeit versprühen,
- Bauteilen, die einen Dampf führen,
- Bauteilen, die einen Dampf verspritzen, und von
- Bauteilen, die einen Dampf versprühen.

3. Schrumpfspannabkühlvorrichtung (42a-b; 42d) nach Anspruch 1, **gekennzeichnet durch** eine Antriebseinheit (30a-b; 30d), welche dazu vorgesehen ist, die Halteeinrichtung (28a-b; 28d) durch eine Bewegung der Halteeinrichtung (28a-b; 28d) in eine Taktplatz-Einlagerposition oder in eine Taktplatz-Auslagerposition zu verbringen.

4. Schrumpfspannabkühlvorrichtung (42a-b; 42d) nach Anspruch 3, **dadurch gekennzeichnet, dass** die Antriebseinheit (30a-b; 30d) dazu vorgesehen ist, die Taktplätze (24a-b, 26a-b; 24d, 26d) der Halteeinrichtung (28a-b; 28d) rotatorisch um eine Antriebsrotationsachse (32a-b; 32d) der Halteeinrichtung (28a-b; 28d) zu bewegen.

5. Schrumpfspannabkühlvorrichtung (42a; 42d) nach Anspruch 4, **dadurch gekennzeichnet, dass** die Antriebsrotationsachse (32a; 32d) der Antriebseinheit (30a; 30d) vertikal ausgerichtet ist und/oder dass die Antriebsrotationsachse (32a; 32d) der Antriebseinheit (30a; 30d) zumindest im Wesentlichen parallel zu einer Werkzeugrotationsachse (34a; 34d) von in der Halteeinrichtung (28a; 28d) gehalterten Werkzeugeinheiten (18a; 18d) ausgerichtet ist.

6. Schrumpfspannabkühlvorrichtung (42a; 42d) nach einem der Ansprüche 1 bis 5, **gekennzeichnet durch** eine von der Halteeinrichtung (28a; 28d) getrennt ausgebildete Ein- und/oder Auslagereinheit (36a; 36d), welche zu einer Einlagerung der Werkzeugeinheiten (18a; 18d) in den Kühlbehälter (14a; 14d) und/oder zu einer Auslagerung der Werkzeugeinheiten (18a; 18d) aus dem Kühlbehälter (14a; 14d) vorgesehen ist.

7. Schrumpfspannabkühlvorrichtung (42b) nach Anspruch 4, **dadurch gekennzeichnet, dass** die Antriebsrotationsachse (32b) der Antriebseinheit (30b) horizontal ausgerichtet ist und/oder dass die Antriebsrotationsachse (32b) der Antriebseinheit (30b) zumindest im Wesentlichen senkrecht zu einer Werkzeugrotationsachse (34b) von in der Halteeinrichtung (28b) gehalterten Werkzeugeinheiten (18b) ausgerichtet ist.

8. Schrumpfspannabkühlvorrichtung (42b) nach Anspruch 7, **dadurch gekennzeichnet, dass** die Halteeinrichtung (28b) zugleich eine Ein- und/oder Auslagereinheit (36b) ausbildet, welche zu einer Einlagerung der Werkzeugeinheiten (18b) in den Kühlbehälter (14b) und/oder zu einer Auslagerung der Werkzeugeinheiten (18b) aus dem Kühlbehälter (14b) vorgesehen ist.

9. Schrumpfspannabkühlvorrichtung (42a-c) nach einem der Ansprüche 1 oder 2, **gekennzeichnet durch** zumindest einen weiteren Kühlbehälter (86a-c, 124a-c), welcher getrennt von dem Kühlbehälter (14a-c) ausgebildet ist und welcher einen weiteren Aufnahmeraum (112a-c, 126a-c) zur Aufnahme zumindest einer weiteren Werkzeugeinheit (18a-c) ausbildet.

10. Schrumpfspannabkühlvorrichtung (42a-c) nach Anspruch 9, **dadurch gekennzeichnet, dass** das Klimagerät (20a-c) dazu vorgesehen ist, die in dem Kühlbehälter (14a-c) und in dem weiteren Kühlbehälter (86a-c, 124a-c) enthaltenen Kühlgase oder Kühlgasgemische unabhängig voneinander zu kühlen und/oder die Zufuhr der gekühlten Kühlgase oder Kühlgasgemische zu dem Kühlbehälter (14a-c) und zu dem weiteren Kühlbehälter (86a-c, 124a-c) unabhängig voneinander zu steuern und/oder zu regeln.

11. Schrumpfspannabkühlvorrichtung (42b-d) nach einem der Ansprüche 1 oder 2, 9 oder 10, **dadurch gekennzeichnet, dass** der Kühlbehälter (14b-d) und/oder der weitere Kühlbehälter (86b-c, 124b-c) ein beweglich gelagertes Werkzeugeinheit-Aufstellelement (88b-d) zur Lagerung zumindest einer Werkzeugeinheit (18b-d) umfasst, welches dazu vorgesehen ist, eine auf dem Werkzeugeinheit-Aufstellelement (88b-d) gelagerte Werkzeugeinheit (18b-d) zwischen einer Kühlposition (90b-d) des Kühlbehälters (14b-d) und einer Ein- und/oder Auslagerposition (92b-d) des Kühlbehälters (14b-d) zu bewegen.

12. Schrumpfspannabkühlvorrichtung (42c) nach einem der Ansprüche 9 bis 11, **dadurch gekennzeichnet, dass** der Kühlbehälter (14c) und der weitere Kühlbehälter (86c, 124c) separat voneinander bedienbare Verschlusselemente (94c, 96c, 128c) aufweisen.

13. Schrumpfspannabkühlvorrichtung (42c) nach den Ansprüchen 11 und 12, **dadurch gekennzeichnet, dass** das Verschlusselement (94c, 96c, 128c) zumindest eines der Kühlbehälter (14c, 86c, 124c) rotationsfest mit dem jeweiligen Werkzeugeinheit-Aufstellelement (88c) des zugehörigen Kühlbehälters (14c, 86c, 124c) verbunden ist.

14. Schrumpfspannabkühlvorrichtung (42a-d) nach einem der vorhergehenden Ansprüche, **dadurch gekennzeichnet, dass** zumindest einem Kühlbehälter (14a-d, 86a-d, 124a-d) zumindest ein Temperatursensor (98a-d) zugeordnet ist, welcher dazu vorgesehen ist, eine Temperatur des Kühlgases oder Kühlgasgemischs innerhalb des Kühlbehälters (14a-d, 86a-d, 124a-d) und/oder eine Temperatur einer in dem Kühlbehälter (14a-d, 86a-d, 124a-d) angeordneten Werkzeugeinheit (18a-d) zu sensieren, wobei der Kühlbehälter (14c-d, 86c-d, 124c-d) ein Verschlusselement (94c-d) aufweist, welches in Abhängigkeit von einer von dem Temperatursensor (98c-d) detektierten Temperatur zumindest teilautomatisiert gesteuert ist.

15. System (40a-d) mit einer Schrumpfspannabkühlvorrichtung (42a-d) nach einem der vorhergehenden Ansprüche und mit einem Handhabungsroboter (44a-d) zu einer automatischen Bestückung der Schrumpfspannabkühlvorrichtung (42a-d) mit Werkzeugeinheiten (18a-d) und/oder zu einer Entnahme von Werkzeugeinheiten (18a-d) aus der Schrumpfspannabkühlvorrichtung (42a-d).

16. Schrumpfspanngerät (100a-d) mit einer integrierten Schrumpfspannabkühlvorrichtung (42a-d) nach einem der Ansprüche 1 bis 14 und/oder mit einem System (40a-d) nach Anspruch 15, mit zumindest einer integrierten Induktionsheizeinheit (102a-d) zur thermischen Aufweitung von Werkzeugaufnahmen (10a-d) mittels induktiven Erhitzens und vorzugsweise mit zumindest einer integrierten Längenmesseinrichtung (104a-d) zur Längenvermessung von Werkzeugeinheiten (18a-d).

17. Schrumpfspanngerät (100a-d) nach Anspruch 16, **gekennzeichnet durch** zumindest eine integrierte weitere Induktionsheizeinheit (106a-d) zur thermischen Aufweitung von Werkzeugaufnahmen (10a-d) mittels induktiven Erhitzens, wobei die Induktionsheizeinheit (102a-d) eine erste Induktionsspuleneinrichtung (108a-d) aufweist und wobei die weitere Induktionsheizeinheit (106a-d) eine zweite Induktionsspuleneinrichtung (110a-d) aufweist, welche wesentlich verschieden von der ersten Induktionsspuleneinrichtung (108a-d) ausgebildet ist.

18. Werkzeug-Schrumpfspannverfahren mit einem Abkühlschritt (46a-d), in dem eine, zuvor in einem Aufheizschritt (48a-d) durch Erhitzen aufgeweitete, Werkzeugaufnahme (10a-d) in einem Kühlbehälter (14a-d), welcher einen Aufnahmeraum (16a-d) zur Aufnahme zumindest einer, eine Werkzeugaufnahme (10a-d) und ein Werkzeug (12a-d) umfassenden, Werkzeugeinheit (18a-d) ausbildet, und welcher ein aktiv gekühltes Kühlgas oder Kühlgasgemisch, insbesondere Kühlluft, beinhaltet mittels einer Schrumpfspannabkühlvorrichtung (42a-d) nach einem der Ansprüche 1 bis 14 abgekühlt wird, wobei das Kühlgas oder das Kühlgasgemisch in dem Kühlbehälter (14a-d) und/oder der Kühlbehälter (14a-d) selbst vor dem Abkühlschritt (46a-d), insbesondere vor einer Einlagerung der in dem Abkühlschritt (46a-d) zu kühlenden Werkzeugeinheit (18a-d) in den Kühlbehälter (14a-d), vorgekühlt wird.

## Claims

1. Shrink-clamping cooling device (42a-d), at least for an, in particular contour-independent, tempering of, in particular previously heated, tool holders (10a-d) and/or tools (12a-d),
with at least one cooling container (14a-d) which forms a receiving space (16a-d) for receiving at least one tool unit (18a-d) comprising a tool holder (10a-d) and a tool (12a-d),
wherein the shrink-clamping cooling device has a movably supported holding device (28a-b; 28d) for holding at least two tool units (18a-b; 18d), which is arranged at least partly in the receiving space (16a-b; 16d) of the cooling container (14a-b; 14d) and has at least two cycle places (24a-b, 26a-b; 24d, 26d),
**characterized by** at least one climate-control apparatus (20a-d), which is configured for essentially tempering, preferably actively cooling, a cooling gas or cooling gas mixture, in particular cooling air, which is contained in the receiving space (16a-d) of the cooling container (14a-d), and/or a cooling gas or cooling gas mixture, in particular cooling air, fed to the receiving space (16a-d) of the cooling container (14a-d) for the purpose of cooling the tool unit (18a-d),
and by at least one circulation unit (22a-d), which is configured to create an at least substantially even temperature distribution within the cooling container (14a-d).

2. Shrink-clamping cooling device (42a-d) according to claim 1,
**characterized in that** the cooling container (14a-d) is free of
- liquid-conducting components,
- liquid-sputtering components,
- liquid-spraying components,
- vapor-conducting components,
- vapor-sputtering components, and of
- vapor-spraying components.

3. Shrink-clamping cooling device (42a-b; 42d) according to claim 1,
**characterized by** a drive unit (30a-b; 30d), which is configured to bring the holding device (28a-b; 28d) into a cycle-place lay-in position or into a cycle-place take-out position by a movement of the holding device (28a-b; 28d).

4. Shrink-clamping cooling device (42a-b; 42d) according to claim 3,
**characterized in that** the drive unit (30a-b; 30d) is configured to move the cycle places (24a-b, 26a-b; 24d, 26d) of the holding device (28a-b; 28d) rotationally around a drive rotation axis (32a-b; 32d) of the holding device (28a-b; 28d).

5. Shrink-clamping cooling device (42a; 42d) according to claim 4,
**characterized in that** the drive rotation axis (32a; 32d) of the drive unit (30a; 30d) is oriented vertically;
and/or that the drive rotation axis (32a; 32d) of the drive unit (30a; 30d) is oriented at least substantially parallel to a tool rotation axis (34a; 34d) of tool units (18a; 18d) held in the holding device (28a; 28d).

6. Shrink-clamping cooling device (42a; 42d) according to any one of claims 1 to 5,
**characterized by** a lay-in and/or take-out unit (36a; 36d), which is realized separately from the holding device (28a; 28d) and is configured for laying the tool units (18a; 18d) into the cooling container (14a; 14d) and/or for taking the tool units (18a; 18d) out of the cooling container (14a; 14d).

7. Shrink-clamping cooling device (42b) according to claim 4,
**characterized in that** the drive rotation axis (32b) of the drive unit (30b) is oriented horizontally;
and/or that the drive rotation axis (32b) of the drive unit (30b) is oriented at least substantially perpendicularly to a tool rotation axis (34b) of tool units (18b) held in the holding device (28b).

8. Shrink-clamping cooling device (42b) according to claim 7,
**characterized in that** the holding device (28b) at the same time realizes a lay-in and/or take-out unit (36b), which is configured for laying the tool units (18b) into the cooling container (14b) and/or for taking the tool units (18b) out of the cooling container (14b).

9. Shrink-clamping cooling device (42a-c) according to any one of claims 1 or 2,
**characterized by** at least one further cooling container (86a-c, 124a-c), which is implemented separately from the cooling container (14a-c) and which forms a further receiving space (112a-c, 126a-c) for receiving at least one further tool unit (18a-c).

10. Shrink-clamping cooling device (42a-c) according to claim 9,
**characterized in that** the climate-control apparatus (20a-c) is configured to cool the cooling gases or cooling gas mixtures contained in the cooling container (14a-c) and in the further cooling container (86a-c, 124a-c) independently from each other,
and/or to control and/or regulate the feeding of the cooled cooling gases or cooling gas mixtures to the cooling container (14a-c) and to the further cooling container (86a-c, 124a-c) independently from each other.

11. Shrink-clamping cooling device (42b-d) according to any one of claims 1 or 2, 9 or 10,
**characterized in that** the cooling container (14b-d) and/or the further cooling container (86b-c, 124b-c) comprise/comprises a movably supported tool-unit put-up element (88b-d) for supporting at least one tool unit (18b-d), which is configured to move a tool unit (18b-d) supported on the tool-unit put-up element (88b-d) between a cooling position (90b-d) of the cooling container (14b-d) and a lay-in and/or take-out position (92b-d) of the cooling container (14b-d).

12. Shrink-clamping cooling device (42c) according to any one of claims 9 to 11,
**characterized in that** the cooling container (14c) and the further cooling container (86c, 124c) comprise closure elements (94c, 96c, 128c), which are operable separately from each other.

13. Shrink-clamping cooling device (42c) according to claims 11 and 12,
**characterized in that** the closure element (94c, 96c, 128c) of at least one of the cooling containers (14c, 86c, 124c) is connected to the respective tool-unit put-up element (88c) of the allocated cooling container (14c, 86c, 124c) in a rotationally fixed manner.

14. Shrink-clamping cooling device (42a-d) according to any one of the preceding claims,
**characterized in that** at least one cooling container (14a-d, 86a-d, 124a-d) is assigned at least one temperature sensor (98a-d), which is configured to sense a temperature of the cooling gas or cooling gas mixture within the cooling container (14a-d, 86a-d, 124a-d) and/or a temperature of a tool unit (18a-d) that is arranged in the cooling container (14a-d, 86a-d, 124a-d),
wherein the cooling container (14c-d, 86c-d, 124c-d) comprises a closure element (94c-d), which is controlled, in an at least semi-automated manner, depending on a temperature detected by the temperature sensor (98c-d).

15. System (40a-d)
with a shrink-clamping cooling device (42a-d) according to any one of the preceding claims
and with a handling robot (44a-d) for an automated loading of the shrink-clamping cooling device (42a-d) with tool units (18a-d) and/or for a removal of tool units (18a-d) out of the shrink-clamping cooling device (42a-d).

16. Shrink-clamping apparatus (100a-d)
with an integrated shrink-clamping cooling device (42a-d) according to any one of claims 1 to 14 and/or with a system (40a-d) according to claim 15, with at least one integrated induction heating unit (102a-d) for a thermal expansion of tool holders (10a-d) via inductive heating, and preferably with at least one integrated length measuring device (104a-d) for a length measurement of tool-units (18a-d).

17. Shrink-clamping apparatus (100a-d) according to claim 16,
**characterized by** at least one integrated further induction heating unit (106a-d) for a thermal expansion of tool holders (10a-d) via inductive heating, with the induction heating unit (102a-d) comprising a first induction coil device (108a-d) and the further induction heating unit (106a-d) comprising a second induction coil device (110a-d) that is implemented essentially different than the first induction coil device (108a-d).

18. Tool shrink-clamping method
with a cooling step (46a-d) in which a tool holder (10a-d), which was previously expanded thermally in a heating step (48a-d), is cooled, by means of a shrink-clamping cooling device (42a-d) according to any one of claims 1 to 14, in a cooling container (14a-d), which forms a receiving space (16a-d) for receiving at least one tool unit (18a-d) comprising a tool holder (10a-d) and a tool (12a-d), and which contains an actively cooled cooling gas or cooling gas mixture, in particular cooling air,
wherein the cooling gas or the cooling gas mixture in the cooling container (14a-d) and/or the cooling container (14a-d) itself are/is pre-cooled prior to the cooling step (46a-d), in particular before the tool unit (18a-d) that is to be cooled in the cooling step (46a-d) is laid into the cooling container (14a-d).

## Revendications

1. Dispositif de refroidissement et de serrage par rétrécissement (42a-d), au moins pour, en particulier une thermorégulation indépendante d'un contour, de logements d'outil (10a-d) et/ou d'outils (12a-d), en particulier de logements d'outil (10a-d) et/ou d'outils (12a-d) préchauffés,
avec au moins un récipient de refroidissement (14a-d) qui forme un espace de logement (16a-d) pour recevoir au moins une unité d'outil (18ad) comprenant un logement d'outil (10a-d) et un outil (12a-d),
où le dispositif de refroidissement et de serrage par rétrécissement (42ad) comprend un dispositif de maintien (28a-b ; 28d) disposé au moins en partie dans l'espace de logement (16a-b ; 16d) du récipient de refroidissement (14a-b ; 14d), comprenant au moins deux postes de cadence (24a-b, 26a-b ; 24d, 26d) et supporté de manière mobile, pour maintenir au moins deux unités d'outil (18a-b ; 18d).
**caractérisé par** au moins un appareil de climatisation (20a-d) qui est conçu, afin de refroidir l'unité d'outil (18a-d), pour sensiblement thermoréguler, de préférence refroidir activement, un gaz de refroidissement ou un mélange à gaz de refroidissement, en particulier de l'air de refroidissement, contenu dans l'espace de logement (16a-d) du récipient de refroidissement (14a-d) et/ou un gaz de refroidissement ou un mélange à gaz de refroidissement, en particulier de l'air de refroidissement, amené à l'espace de logement (16a-d) du récipient de refroidissement (14a-d),
et par au moins une unité de circulation (22a-d) conçue pour établir une répartition de température au moins sensiblement uniforme dans le récipient de refroidissement (14a-d).

2. Dispositif de refroidissement et de serrage par rétrécissement (42a-d) selon la revendication 1,
**caractérisé en ce que** le récipient de refroidissement (14a-d) est libre
- de composants conduisant un liquide,
- de composants qui éclaboussent un liquide,
- de composants qui pulvérisent un liquide,
- de composants qui conduisent une vapeur,
- de composants qui éclaboussent une vapeur, et
- de composants qui pulvérisent une vapeur.

3. Dispositif de refroidissement et de serrage par rétrécissement (42a-b ; 42d) selon la revendication 1,
**caractérisé par** une unité d'entraînement (30a-b ; 30d) conçue pour amener le dispositif de maintien (28a-b ; 28d) par un mouvement du dispositif de maintien (28a-b ; 28d) dans une position de chargement dans le poste de cadence ou dans une position de déchargement du poste de cadence.

4. Dispositif de refroidissement et de serrage par rétrécissement (42a-b ; 42d) selon la revendication 3,
**caractérisé en ce que** l'unité d'entraînement (30a-b ; 30d) est conçue pour mouvoir les postes de cadence (24a-b, 26a-b ; 24d, 26d) du dispositif de maintien (28a-b ; 28d) rotationnellement autour d'un axe d'entraînement rotatif (32a-b ; 32d) du dispositif de maintien (28a-b ; 28d).

5. Dispositif de refroidissement et de serrage par rétrécissement (42a ; 42d) selon la revendication 4,
**caractérisé en ce que** l'axe d'entraînement rotatif (32a ; 32d) de l'unité d'entraînement (30a ; 30d) est orienté verticalement et/ou que l'axe d'entraînement rotatif (32a ; 32d) de l'unité d'entraînement (30a ; 30d) est orienté au moins sensiblement en parallèle à un axe rotatif d'outil (34a ; 34d) d'unités d'outil (18a ; 18d) maintenues dans le dispositif de maintien (28a ; 28d).

6. Dispositif de refroidissement et de serrage par rétrécissement (42a ; 42d) selon l'une quelconque des revendications 1 à 5,
**caractérisé par** une unité de chargement et/ou de déchargement (36a ; 36d) qui est réalisée séparément du dispositif de maintien (28a ; 28d) et est conçue pour un chargement des unités d'outil (18a ; 18d) dans le récipient de refroidissement (14a ; 14d) et/ou pour un déchargement des unités d'outil (18a ; 18d) du récipient de refroidissement (14a ; 14d).

7. Dispositif de refroidissement et de serrage par rétrécissement (42b) selon la revendication 4,
**caractérisé en ce que** l'axe d'entraînement rotatif (32b) de l'unité d'entraînement (30b) est orienté horizontalement et/ou que l'axe d'entraînement rotatif (32b) de l'unité d'entraînement (30b) est orienté au moins sensiblement perpendiculairement à un axe rotatif d'outil (34b) d'unités d'outil (18b) maintenues dans le dispositif de maintien (28b).

8. Dispositif de refroidissement et de serrage par rétrécissement (42b) selon la revendication 7,
**caractérisé en ce que** le dispositif de maintien (28b) forme en même temps une unité de chargement et/ou de déchargement (36b) conçue pour un chargement des unités d'outil (18b) dans le récipient de refroidissement (14b) et/ou pour un déchargement des unités d'outil (18b) du récipient de refroidissement (14b).

9. Dispositif de refroidissement et de serrage par rétrécissement (42a-c) selon l'une quelconque des revendications 1 ou 2,
**caractérisé par** au moins un autre récipient de refroidissement (86a-c, 124a-c) qui est réalisé séparément du récipient de refroidissement (14a-c) et qui forme un autre espace de logement (112a-c, 126a-c) pour recevoir au moins une autre unité d'outil (18a-c).

10. Dispositif de refroidissement et de serrage par rétrécissement (42a-c) selon la revendication 9,
**caractérisé en ce que** l'appareil de climatisation (20a-c) est conçu pour refroidir - indépendamment l'un de l'autre - les gaz de refroidissement ou mélanges à gaz de refroidissement contenus dans le récipient de refroidissement (14a-c) et dans l'autre récipient de refroidissement (86a-c, 124a-c) et/ou pour contrôler en boucle ouvert et/ou boucle fermé l'amenée des gaz de refroidissement ou mélanges à gaz de refroidissement refroidis - indépendamment l'un de l'autre - au récipient de refroidissement (14a-c) et à l'autre récipient de refroidissement (86a-c, 124a-c).

11. Dispositif de refroidissement et de serrage par rétrécissement (42b-d) selon l'une quelconque des revendications 1 ou 2, 9 ou 10,
**caractérisé en ce que** le récipient de refroidissement (14b-d) et/ou l'autre récipient de refroidissement (86b-c, 124b-c) comprend un élément à mise en place d'unité d'outil (88b-d) pour supporter au moins une unité d'outil (18b-d), qui est supporté de manière mobile et est conçu pour mouvoir une unité d'outil (18b-d) supportée sur l'élément de mise en place d'unité d'outil (88b-d) entre une position de refroidissement (90b-d) du récipient de refroidissement (14b-d) et une position de chargement et/ou de déchargement (92b-d) du récipient de refroidissement (14b-d).

12. Dispositif de refroidissement et de serrage par rétrécissement (42c) selon l'une quelconque des revendications 9 à 11,
**caractérisé en ce que** le récipient de refroidissement (14c) et l'autre récipient de refroidissement (86c, 124c) comprennent des éléments de fermeture (94c, 96c, 128c) qui peuvent être opérés séparément l'un de l'autre.

13. Dispositif de refroidissement et de serrage par rétrécissement (42c) selon les revendications 11 et 12,
**caractérisé en ce que** l'élément de fermeture (94c, 96c, 128c) d'au moins l'un des récipients de refroidissement (14c, 86c, 124c) est relié fixement en rotation à l'élément de mise en place d'unité d'outil (88c) respectif du récipient de refroidissement (14c, 86c, 124c) associé.

14. Dispositif de refroidissement et de serrage par rétrécissement (42a-d) selon l'une quelconque des revendications précédentes,
**caractérisé en ce qu'**à au moins un récipient de refroidissement (14a-d, 86a-d, 124a-d) au moins un capteur de température (98a-d) est associé, qui est conçu pour détecter une température du gaz de refroidissement ou du mélange à gaz de refroidissement dans le récipient de refroidissement (14a-d, 86a-d, 124a-d) et/ou une température d'une unité d'outil (18a-d) disposée dans le récipient de refroidissement (14a-d, 86a-d, 124a-d), le récipient de refroidissement (14c-d, 86c-d, 124c-d) comprenant un élément de fermeture (94c-d) qui est contrôlé de manière au moins semi-automatisée en fonction d'une température détectée par le capteur de température (98c-d).

15. Système (40a-d)
comprenant un dispositif de refroidissement et de serrage par rétrécissement (42a-d) selon l'une quelconque des revendications précédentes
et comprenant un robot de manutention (44a-d) pour un chargement automatique du dispositif de refroidissement et de serrage par rétrécissement (42a-d) avec d'unités d'outil (18a-d) et/ou pour le prélèvement d'unités d'outil (18a-d) du dispositif de refroidissement et de serrage par rétrécissement (42a-d).

16. Appareil de serrage par rétrécissement (100a-d) avec un dispositif de refroidissement et de serrage par rétrécissement intégré (42a-d) selon l'une quelconque des revendications 1 à 14 et/ou avec un système (40a-d) selon la revendication 15,
comprenant au moins une unité de chauffage par induction intégrée (102a-d) pour l'expansion thermique de logements d'outil (10a-d) moyennant chauffage par induction, et comprenant de préférence au moins un dispositif de mesure de longueur intégré (104a-d) pour la mesure de longueur d'unités d'outil (18a-d).

17. Appareil de serrage par rétrécissement (100a-d) selon la revendication 16,
**caractérisé par** au moins une autre unité de chauffage par induction intégrée (106a-d) pour l'expansion thermique de logements d'outil (10a-d) moyennant chauffage par induction,
l'unité de chauffage par induction (102a-d) comprenant un premier dispositif de bobine d'induction (108a-d) et l'autre unité de chauffage par induction (106a-d) comprenant un deuxième dispositif de bobine d'induction (110a-d) réalisé de manière sensiblement différente du premier dispositif de bobine d'induction (108a-d).

18. Procédé de serrage par rétrécissement d'outil
comprenant une étape de refroidissement (46a-d) dans laquelle un logement d'outil (10a-d), préalablement expansé par chauffage dans une étape de chauffage (48a-d), est refroidi dans un récipient de refroidissement (14a-d) qui forme un espace de logement (16a-d) pour recevoir au moins une unité d'outil (18a-d) comprenant un logement d'outil (10a-d) et un outil (12a-d), et qui contient un gaz de refroidissement ou un mélange à gaz de refroidissement refroidi activement, en particulier de l'air de refroidissement, est refroidi moyennant un dispositif de refroidissement et de serrage par rétrécissement (42a-d) selon l'une quelconque des revendications 1 à 14,
où le gaz de refroidissement ou le mélange à gaz de refroidissement dans le récipient de refroidissement (14a-d) et/ou le récipient de refroidissement (14a-d) lui-même sont/est pré-refroidi/s avant l'étape de refroidissement (46a-d), en particulier avant un chargement de l'unité d'outil (18a-d), qui est à refroidir dans l'étape de refroidissement (46a-d), dans le récipient de refroidissement (14a-d).
